# EUROPÄISCHE PATENTSCHRIFT

(11) **EP 4 384 345 B1**
(45) Veröffentlichungstag und Bekanntmachung des Hinweises auf die Patenterteilung: **03.09.2025**
(21) Anmeldenummer: 22758147.7
(22) Anmeldetag: 20.07.2022
(51) Int. Cl.: B23P 19/06, B21D 37/16, B21D 39/03, B21J 15/10, F16B 5/04, F16B 37/06, B21J 15/02, B21J 15/08, B21K 25/00, B23P 19/04

(54) **FUEGEWERKZEUGEINHEIT, WERKZEUGZANGE UND FUEGEVORGANG**
JOINING TOOL UNIT, TOOL GRIPPER, AND JOINING PROCESS
UNITÉ OUTIL D'ASSEMBLAGE, DISPOSITIF DE PRÉHENSION D'OUTIL ET PROCÉDÉ D'ASSEMBLAGE

(30) Priorität: 13.08.2021 DE 102021121084
(43) Veröffentlichungstag der Anmeldung: 19.06.2024
(73) Patentinhaber: TOX PRESSOTECHNIK GmbH & Co. KG, 88250 Weingarten (DE); Alpha Laser GmbH, 82178 Puchheim (DE)
(72) Erfinder: BADENT, Michael, 88250 Weingarten (DE); PFEIFFER, Wolfgang, 88709 Hagnau am Bodensee (DE); MATZKE, Marcus, 88214 Ravensburg (DE); SOLLNER, Juergen, 88289 Waldburg (DE)
(74) Vertreter: RavensPAT Patentanwälte Partnerschaft mbB
(86) Internationale Anmeldenummer: PCT/EP2022/070306
(87) Internationale Veröffentlichungsnummer: WO 2023/016762

(56) Entgegenhaltungen:
- EP-A1- 2 543 451
- DE-A1- 102018 202 140
- JP-A- 2019 000 883
- US-A1- 2021 178 457

## Beschreibung

### Stand der Technik

Es sind Fügewerkzeugeinheiten zum Bearbeiten von Werkstücken bekannt, zum Beispiel Fügewerkzeuge mit solchen Einheiten zum Fügen durch Umformen von Werkstücken, bei denen das Werkstück zwischen zwei Abschnitten der Fügewerkzeugeinheit beim Bearbeitungsvorgang gehalten ist.

Ein Abschnitt umfasst beispielsweise ein Werkzeug oder ein Werkzeugelement der Fügewerkzeugeinheit zum Beispiel einen Stempel oder eine Matrize.

Häufig treten bei der Frage des Einsatzes von bekannten Fügewerkzeugeinheiten unter Anwendung von alternativen oder neuen Technologien erhebliche praxisrelevante Probleme auf, was beispielsweise die Sicherheit für im Umfeld des Einsatzortes arbeitende Personen und/oder die breite praxisrelevante Anwendung zum Beispiel in automatisierten Prozessen angeht. Manchen Technologien weisen für spezielle Anwendungsgebiete einerseits herausragende Vorteile auf, andererseits stehen in der praxisbezogenen Realisierung erhebliche Hürden entgegen, dass einzelne Technologien mit hohem Potential im industriellen Einsatz keine breite Anwendung finden bzw. nicht über ein Forschungs- oder Entwicklungsstadium hinausgehen. Beispielsweise sind Fügewerkzeugeinheiten aus der US 2021/ 178457 A1, der JP 2019 000 883 A oder der EP 2 543 451 A1 bekannt. Das Dokument US 2021/178457 A1 offenbart eine Fügewerkzeugeinheit nach dem Oberbegriff des Anspruchs 1.

### Aufgabe und Vorteile der Erfindung

Aufgabe der vorliegenden Erfindung ist es, eine im Hinblick auf die Nutzung alternativer Technologien verbesserte Fügewerkzeugeinheit bzw. einen verbesserten Fügevorgang zu bereitzustellen. Insbesondere liegt der Erfindung die Aufgabe zugrunde, eine Fügewerkzeugeinheit bereitzustellen, mittels welcher eine auf Lichtenergie basierende Technologie mit werkstückseitigem Energieeintrag durch Lichtstrahlung für den Nutzer mit ausreichend hoher Sicherheit und für die automatisierte Anwendung praxistauglich und vorteilhaft einsetzbar ist.

Diese Aufgabe wird durch den unabhängigen Anspruch 1 gelöst.

In den abhängigen Ansprüchen sind zweckmäßige und vorteilhafte Varianten der Erfindung aufgezeigt.

Die Erfindung geht aus von einer Fügewerkzeugeinheit, wobei die Fügewerkzeugeinheit einen Niederhalter mit einem linear bewegbaren Werkzeug und ein Werkzeuggegenelement aufweist, wobei der Niederhalter mit dem linear bewegbaren Werkzeug und das Werkzeuggegenelement sich gegenüberliegend vorhanden sind, wobei ein Werkstück im angeordneten Zustand an der Fügewerkzeugeinheit am Werkzeuggegenelement aufliegt, wobei der Niederhalter im angeordneten Zustand des Werkstücks an der Fügewerkzeugeinheit an einer Oberfläche des Werkstücks anstehend anordenbar ist, wobei der Niederhalter ein Lichtleitungssystem aufweist, wobei das Lichtleitungssystem dazu ausgebildet ist, einen Lichtstrahl eines Lichts in Richtung einer Fügestelle des Werkstücks zu leiten, wenn das Werkstück an der Fügewerkzeugeinheit angeordnet ist, wobei das Lichtleitungssystem derart am Niederhalter vorhanden ist, dass der Lichtstrahl ausschließlich in einem Winkel größer 0° zu einer Bewegungsachse des linear bewegbaren Werkzeugs auf die Fügestelle einstrahlt, wobei das Lichtleitungssystem des Niederhalters das Licht entlang seines Lichtstrahls nach außen lichtdicht abschirmt.

Mit dem vorgeschlagenen Lichtleitungssystem wird ein praxistauglicher Einsatz der Fügewerkzeugeinheit möglich. Insbesondere kann die Fügewerkzeugeinheit vorteilhaft ohne gravierende Zusatzmaßnahmen, was z. B. Sicherheitsaspekte bezüglich eines Gefahrenpotentials von hoher Lichtenergie angeht, eingesetzt werden. Damit ist es in der Praxis vorteilhaft möglich, die erfindungsgemäße Fügewerkzeugeinheit für erweiterte Anwendungen gegenüber bekannten Fügewerkzeugeinheiten vorzusehen. Mit der Erfindung lassen sich konstruktive und damit technologische und sicherheitstechnische Vorteile erzielen.

Die lichtdichte Abschirmung des Lichtstrahls nach außen durch das Lichtleitungssystem bezieht sich auf den angeordneten Zustand des Werkstücks an der Fügewerkzeugeinheit. Eine für den Austritt des Lichtstrahls vorgesehene Austrittsöffnung des Lichtleitungssystems, zum Beispiel im Bereich einer freien vorderen Stirnseite des Niederhalters, ist dann abgedeckt von der Oberfläche bzw. Außenseite des Werkstücks. Dabei liegt der Niederhalter mit seiner Stirnseite an der Oberfläche des Werkstücks an.

So ist es möglich, dass keine sicherheitstechnisch relevanten Anteile des Lichtstrahls und damit der Lichtenergie nach außen in die Umgebung gelangen. Der Lichtstrahl wird auf seinem Weg bis zur Austrittsöffnung vom Lichtleitungssystem bzw. von umgebenden Wandungen der geschlossenen z. B. im Niederhalter integrierten Leitung wie eine Bohrung abgeschirmt.

Der Lichtstrahl verlässt das Lichtleitungssystem an der Austrittsöffnung und trifft dann auf die Oberfläche des Werkstücks im Bereich eines anschließend zu bildenden Fügepunkts bzw. einer Fügestelle. Das Werkstückmaterial erwärmt sich und erweicht aufgrund des Energieeintrags mit dem Lichtstrahl durch Absorption der Lichtenergie.

Bei nicht an der Fügewerkzeugeinheit angeordnetem Werkstück sind Sicherheitsvorkehrungen getroffen, dass ein Lichtstrahl nicht existiert bzw. die Lichtquelle deaktiviert ist, um eine Gefährdung von Personen im nahen Umfeld der Fügewerkzeugeinheit sicher auszuschließen.

Mit dem vorgeschlagenen Lichtleitungssystem ist die Fügewerkzeugeinheit vergleichsweise vereinfacht, insbesondere vergleichsweise kostengünstig ausgebildet. Beispielsweise ist hierdurch eine Fügewerkzeugeinheit realisierbar, welche für einen Strahlenschutz eines Mitarbeiters keine zusätzliche Umhausung benötigt. Das Lichtleitungssystem ist integral ausgebildet und stellt den Strahlenschutz nach außen bereit. Dies ist bei zum Beispiel bei einer Laserlicht-Anwendung von besonderer Bedeutung und vorteilhaft.

Insbesondere sind bisher mit klassischen Fügewerkzeugen schwer oder nicht praxistauglich bearbeitbare Werkstoffe oder Werkstoffkombinationen mit der vorgeschlagenen Fügewerkzeugeinheit umfassend eine Lichtstrahl-Behandlung aufgrund des vorgeschlagenen Lichtleitungssystems auch unter industrierelevanten Vorgaben vorteilhaft bearbeitbar. Damit ist die Fügewerkzeugeinheit unter Zuhilfenahme der Lichtstrahl-Behandlung mit dem beschriebenen Lichtleitungssystem für Anwendungen einsetzbar, die sich durch einen vergleichsweise hohen Automatisierungsgrad auszeichnen wie z. B. Anwendungen in einer Linienfertigung zum Beispiel von Fahrzeugen in der Automobilfertigung.

Nachteilig bei einem Konzept, wonach mit der Fügewerkzeugeinheiten ein lichtbasierender Energieeintrag am Werkstück erfolgt, sind vergleichsweise lange Fügezykluszeiten. Ebenfalls ist es dabei nachteilig, dass aufgrund zum Beispiel eines Laserlicht-Einsatzes ein Strahlungsschutz von Personen im näheren Umfeld der Fügewerkzeugeinheit gewährleistet werden muss, welche mit der Fügewerkzeugeinheit arbeiten oder sich im Bereich der Fügewerkzeugeinheit aufhalten können. Bei solch einer Fügewerkzeugeinheit muss hierzu zum Beispiel die komplette Fügewerkzeugeinheit mit einer Umhausung versehen werden, welche für Licht des Laserstrahls nicht passierbar ist bzw. diese nach außen abschirmt. Solche Konzepte sind vergleichsweise teuer und aufwendig und für automatisierte z. B. roboterunterstützte Fertigungsstraßen nicht praxistauglich.

Das Lichtleitungssystem ist beispielsweise derart ausgebildet, dass über die Lichtstrahlerstreckung der radiale Abstand des Lichtstrahls zur Bewegungsachse des bewegbaren Werkzeugs in Richtung zum Werkzeuggegenelement hin bzw. zur freien Stirnseite des Niederhalters hin sich verringert bzw. kleiner wird. Vorzugsweise weist der Lichtstrahl einen linearen beispielsweise einen nicht fokusierten oder nicht aufweitenden Verlauf auf. Dementsprechend ist die Leitung des Lichtleitungssystems im Niederhalter ebenfalls bevorzugt linear bzw. mit einer gleichbleibenden kontinuierlichen Schrägstellung ausgestaltet, die zwischen Null und 20 Winkelgraden zur Bewegungsachse des bewegbaren Werkzeugs beträgt.

Das Lichtleitungssystem bzw. der Lichtstrahl ist so ausgerichtet, dass das Licht bei angeordnetem Werkstück auf einen Bereich einer Oberfläche des Werkstücks trifft, in dem eine Fügebearbeitung wie z. B. einem Clinchvorgang durch das bewegbare Werkzeug erfolgt, insbesondere das bewegbare Werkzeug auf die Oberfläche verformend einwirkt z. B. in das Werkstück bei der Bearbeitung eintaucht. Vorzugsweise bildet der vom Lichtstrahl angestrahlte bzw. beaufschlagte Bereich der Oberfläche des Werkstücks eine angenähert kreisrunde Fläche. Die Größe und/oder Form des vom aus dem Niederhalter austretenden Lichtstrahls angestrahlten Flächenbereichs der Oberfläche des Werkstücks liegt im Bereich einer Größe und/oder Form einer Stirnfläche des bewegbaren Werkzeugs, die auf die Werkstückoberfläche einwirkt bei der Werkstück-Bearbeitung.

Mit der Erfindung wird vorteilhaft eine grundsätzliche Funktionserweiterung mit einer Neufunktion einer Standardkomponente von Fügewerkzeugeinheiten bzw. des Niederhalters erreicht. Die Standardkomponente ist vorteilhaft eine werkstücknahe Komponente bzw. ein stempelseitiger und/oder matrizenseitiger Niederhalter.

Aufgrund der Möglichkeit der Erwärmung des zu fügenden Werkstücks durch die Fügewerkzeugeinheit ist eine Verbesserung bereits möglicher bzw. heute bekannter Verbindungsanwendungen realisierbar.

Erfindungsgemäß ist das Lichtleitungssystem im Niederhalter integriert vorhanden, sodass der Lichtstrahl unmittelbar an das Werkstück heranführbar ist.

Weiter lässt sich innerhalb des Bauteilvolumens des Niederhalters das Lichtleitungssystem ohne Um- oder Neukonstruktion des Niederhalters integrieren und umhüllen. Außerdem gelingt die Unterbringung integral innerhalb eines Bauteils, wie des Niederhalters, der zwingend bzw. ohnehin zur Fügewerkzeugeinheit gehört.

Daher muss gegenüber bekannten Fügewerkzeugeinheiten keine oder keine unerwünschte konstruktive Veränderung der Fügewerkzeugeinheit erfolgen.

Vorteilhafterweise sind mit der vorgeschlagenen im Niederhalter integrierten Lichtleitung keine weiteren oder zusätzlichen Bauteile an der Fügewerkzeugeinheit notwendig gegenüber bekannten Fügewerkzeugeinheiten. Außerdem ist vorteilhaft keine weitere Kinematik z. B. mit einem Antrieb und einer Bewegungsführung und Bewegungslagerung zur Bereitstellung der Lichtstrahlführung und des Lichtstrahls nötig, zum Beispiel zum Bereitstellen von Strahlwegen des Lichtstrahls bzw. zum Heran- und Wegbewegen von bei bisherigen Fügewerkzeugeinheiten im Lichtstrahlweg vorhandenen Abschnitten der Fügewerkzeugeinheit, was konstruktive, wirtschaftliche und technische Nachteile mit sich bringt.

Zur Bereitstellung des Lichtstrahls ist eine Lichtquelle wie zum Beispiel eine Laser-Lichtquelle vorgesehen, die zum Beispiel Teil der Fügewerkzeugeinheit ist.

Die leichte Anstellung bzw. Schrägausrichtung des Lichtstrahls hin zur bzw. auf die Fügestelle am Werkstück ermöglicht zum einen eine vergleichsweise schlanke Bauweise des Niederhalters, insbesondere in seinem vorderen zum Werkzeuggegenelement zugewandten Endabschnitt, wo nahezu keine Veränderung eines Außenmaß des Niederhalters stattfindet, was z. B. vorteilhaft ist für die Anordnung und Zugänglichkeit der Fügewerkzeugeinheit am Werkstück bzw. dessen Fügestelle zur Bearbeitung mit dem bewegbaren Werkzeug.

Die Anbindung und Positionierung des Lichtleitungssystems und der Lichtquelle an der Fügewerkzeugeinheit sind außerdem vorteilhaft möglich, in einem Bereich, der z. B. abgewandt ist von dem vorderen Ende des Niederhalters, das dem Werkzeuggegenelement zugewandt ist. Mit der Schrägstellung des Lichtstrahls wird mit größer werdendem Abstand des Lichtleitungssystems vom vorderen Ende des Niederhalters der radiale Abstand zur Bewegungsachse des bewegbaren Werkzeugs größer. Der aufgrund der Schrägstrahlungsleitung vergleichsweise breitere bzw. durchmessergrößere vom vorderen Niederhalterende abgewandte Bereich ist weniger platzkritisch. Dort kann daher eine Anbindung von an das Lichtleitungssystem im Niederhalter anschließende Elementen und Leitungen wie z. B. Stecker für Anschlusseinrichtungen vorteilhaft erfolgen.

Beispielsweise hüllt das Lichtleitungssystem das Licht entlang des Lichtstrahls bzw. entlang dessen Strahlenweges in der Fügewerkzeugeinheit ein bzw. umhüllt den vom Lichtstrahl einnehmbaren Raum. Damit ist das Licht in radialer Richtung zum Lichtstrahl bzw. radial zum Lichtstrahlweg nach außen durch das Lichtleitungssystem lichtdicht abgeschirmt. Eine für den Lichtstrahl mit dem Lichtleitungssystem bereitgestellte lichtdichte Umschirmung im Niederhalter ist insbesondere aufgrund der vergrabenen bzw. integrierten Unterbringung der Lichtleitung im Niederhalter vorteilhaft einrichtbar.

Erfindungsgemäß ist die lichtdichte Umschirmung im Niederhalter durch das Lichtleitungssystem aufgrund der aus dem Vollmaterial des Niederhalters herausgearbeiteten Leitung des Lichtleitungssystems innerhalb des Niederhalters eingerichtet. Beispielsweise ist die lichtdichte Umschirmung im Niederhalter durch das Lichtleitungssystem im umgebenden Vollmaterial des Niederhalters vorteilhaft einrichtbar.

Lichtdicht bedeutet, bezogen auf den angeordneten Zustand des Werkstücks an der Fügewerkzeugeinheit bzw. am Niederhalter, insbesondere einen Leistungsverlust zwischen Null und 20 Prozent bezogen auf eine Leistung des Lichts im Lichtleitungssystem bzw. innerhalb einer Leitung des Lichtleitungssystems. Die Leitung des Lichtleitungssystems ist innerhalb des Niederhalters vorhanden. Der unter lichtdicht zu verstehende maximale Leistungsverlust bis circa 20 % kann auch bezogen sein auf eine andere Bezugsgröße der Lichtleistung, wie z. B. eine optische Ausgangsleistung oder eine Geräte-Nennleistung des Lichtstrahls zum Beispiel der Lichtstrahl-Quelle.

Der Leistungsverlust bezieht sich vorzugsweise auf eine Leistung des Lichtes im Lichtleitsystem des Niederhalters im Bereich eines offenen Endes des Lichtleitungssystems des Niederhalters wie der Austrittsöffnung. Diese kann sich von einer Leistung des Lichtes, die an der Lichtquelle messbar ist unterscheiden, da auf dem Weg des Lichts von der Lichtquelle entlang des anschließenden Lichtweges im Lichtleitungssystem Leistungsverluste auftreten, durch z. B. Reflexion oder Absorption oder chemischen Reaktionen und dergleichen.

Das offene Ende des Lichtleitungssystems des Niederhalters bzw. die Austrittsöffnung ist insbesondere einer Werkstückoberfläche des zu bearbeitenden Werkstücks zugewandt. Von dem offenen Ende des Lichtleitungssystems kommend trifft der Lichtstrahl auf die zu erwärmende Oberfläche des Werkstücks. Dies ist beispielsweise der Bereich der Austrittstelle der Leitung des Lichtleitungssystems am Niederhalter, an dessen dem Werkzeuggegenelement zugewandten Ende bzw. einer Matrizeneinheit zugewandten Seite.

Dementsprechend ist in Richtung der Fügeachse gegenüber der Matrizeneinheit der Niederhalter mit dem linear bewegbaren Werkzeug wie vorzugsweise einem Stempel oder Plunger einer Stempeleinheit vorhanden. Die Fügewerkzeugeinheit umfasst beispielsweise eine Stempeleinheit mit einem als Stempel ausgebildeten Werkzeug und eine Matrizeneinheit, zwischen denen das Werkstück positionierbar ist.

Der Austrittsbereich des Lichtstrahls, am Ende der Leitung des Lichtleitungssystems im Niederhalter ist bei angeordnetem Werkstück dem Werkstück zugewandt. Der Lichtstrahl trifft auf die niederhalterseitige Werkstückoberfläche, die dem Niederhalter zugewandt ist. Mit einer der niederhalterseitigen Werkstückoberfläche gegenüberliegenden bzw. abgewandten Werkstückseite liegt das Werkstück an dem Werkzeuggegenelement wie z. B. einer Stirnseite einer Matrize bzw. einer Matrizenauflageseite an.

Beispielsweise ist das bewegbare Werkzeug ausschließlich linear entlang einer Bewegungsachse bewegbar vorhanden. Hierfür ist beispielsweise eine Antriebseinheit, wie beispielsweise ein Linearantrieb vorgesehen, z. B. eine pneumo-hydraulische, hydraulische, pneumatische und/oder elektrische Antriebseinheit. Vorzugsweise umfasst die Antriebseinheit für das bewegbare Werkzeug und/oder den Niederhalter einen elektromechanischen Servoantrieb.

Im angeordneten Zustand des Werkstücks an der Fügewerkzeugeinheit berührt der Niederhalter in der Regel mit einer beispielsweise flachen bzw. ebenen Seite z. B. mit seiner Stirnseite das Werkstück, wobei die Ebene der Stirnseite in Werkzeugbewegungsrichtung axial ausgerichtet ist, zumindest während des Fügevorgangs, vorzugsweise parallel zur betreffenden Oberfläche des Werkstücks. Der Niederhalter kann auch eine Abstreiferfunktion erfüllen. Die Abstreiferfunktion unterstützt oder bewirkt nach dem Fügevorgang ein Trennen insbesondere von Werkzeug und Werkstück. Der Niederhalter kann alternativ ausgebildet sein, alleinig als Strahlabschirmung und/oder alleinig zur Leitung des Lichtstrahls zu dienen.

Beispielsweise ist der Niederhalter im angeordneten Zustand des Werkstücks an der Fügewerkzeugeinheit durch die Fügewerkzeugeinheit an der Oberfläche des Werkstücks anstehend anordenbar. Die anstehende Anordnung am Werkstück kann mit einer Antriebseinheit und/oder einer Federeinheit der Fügewerkzeugeinheit erfolgen. Vorzugsweise wirkt die vorzugsweise genau eine Antriebseinheit auf das bewegbare Werkzeug wie zum Beispiel einen Stempel. Die Antriebseinheit wirkt vorzugsweise auf den Niederhalter und/oder auf die Federeinheit.

Beispielsweise ist der Niederhalter im angeordneten Zustand eines Werkstücks an der Fügewerkzeugeinheit an einer Oberfläche des Werkstücks anstehend anordenbar, sodass der Niederhalter die Oberfläche berührt und/oder kontaktiert. Eine Kontaktqualität zwischen Niederhalter und Werkstück ist durch Vorgabe einer Kraft beeinflussbar, wobei die Kraft eine Presskraft oder Druckkraft ist, die zwischen Niederhalter und der Oberfläche des Werkstücks wirkt. Hierfür ist z. B. eine mechanische Feder zum Beispiel eine Schrauben-Druckfeder oder eine Luftfeder vorhanden, die zur Bewegungsachse des bewegbaren Werkzeugs axial auf den Niederhalter drückt bzw. diesen in Richtung zum Werkzeuggegenelement vorspannt.

Mit der Fügewerkzeugeinheit ist beispielsweise ein Werkstück bearbeitbar, das genau eine Werkstücklage umfasst. Mit der Fügewerkzeugeinheit ist alternativ ein Werkstück bearbeitbar, das beispielsweise zwei oder mehr als zwei Werkstücklagen umfasst, die bei der Bearbeitung im Bereich des mit der Fügewerkzeugeinheit herstellbaren Fügepunktes aneinander in Anlage sind. Die Werkstücklagen lassen sich mit der Fügewerkzeugeinheit in einem Fügevorgang mittels z. B. einer Fügeverbindung miteinander verbinden und/oder mit der Fügewerkzeugeinheit ist am Werkstück ein Verbindungs- oder Fügeelement anbringbar.

Die Fügewerkzeugeinheit ist vorteilhafterweise zum Setzen eines Funktionselements zum Beispiel zum Setzen einer Stanzmutter, einer Nietmutter, einer Einpressmutter, eines Bolzens, eines Schraubelements am Werkstück und/oder zum Clinchen bzw. Durchsetzfügen und/oder zum Setzen eines Niets wie z. B. einem Clinchniet, Vollstanzniet oder einem Halbhohlstanzniet ausgebildet. Ein Funktionselement ist mit der Fügewerkzeugeinheit z. B. in das Werkstück einnietbar, einpressbar, einstanzbar oder einclinchbar.

Mit der Fügewerkzeugeinheit sind, z.B. mehrere Werkstückteile miteinander verbindbar, zum Beispiel mit einem Verbindungselement wie einem Niet oder ohne ein Verbindungselement z. B. durch einen Clinchvorgang. Mit der Fügewerkzeugeinheit ist es möglich, an einem Werkstück, das zum Beispiel aus genau einem Werkstückteil besteht, das Funktionselement zu setzen.

Vorteilhafterweise lassen sich mit der vorgeschlagenen Fügewerkzeugeinheit auch solche Werkstoffkombinationen bzw. Werkstücklagen bearbeiten, die jeweils aus unterschiedlichen Materialien bestehen. Beispielsweise können die jeweiligen Werkstücklagen aus einem Material bestehen, wobei die Werkstücklagen untereinander stark unterschiedliche technologische Eigenschaften aufweisen, was z. B. eine Umformbarkeit, Fließfähigkeit, Sprödigkeit, Zähigkeit, Härte, Duktilität oder Metallzusammensetzung des Materials angeht. Bevorzugterweise ist die Werkstückseite bzw. die Werkstücklage, an welchem das bewegbare Werkzeug bei einem Fügevorgang anliegt und dieses umformt, härter und/oder spröder als eine weitere Werkstücklage, die darunter bzw. in Richtung des Werkzeuggegenelements vorhanden ist.

Beispielsweise ist die Fügewerkzeugeinheit derart ausgebildet, dass die Werkstücklage, dessen Material zum Beispiel eine vergleichsweise höherer Sprödigkeit besitzt, also zur Rissbildung beim Umformen neigend, an welcher das bewegbare Werkzeug zur Werkstückbearbeitung angreift, durch den auf der Werkstückseite auftreffenden Lichtstrahl erwärmbar ist. Damit wird die Sprödigkeit des Materials kurzzeitig stark reduziert.

Die gezielte und definierte bzw. sichere Möglichkeit einer Zuführung des Lichts an das Werkstück über das Lichtleitungssystem und der Erwärmung des zu bearbeitenden Werkstückbereichs ist vorteilhaft. Aufgrund des Licht-Energieeintrags über den Lichtstrahl wird das bestrahlte Material kurzzeitig in einen Material-Zustandsbereich gebracht, der im Hinblick auf eine Umformung vorteilhaft ist, vorzugsweise weicher bzw. besser fließend umformbar ist. Bisher treten bei üblichen Werkstücktemperaturen, die durch übliche Umgebungstemperaturen z. B. im Bereich von ca. 15 bis ca. 30 Grad Celsius am Ort der Bearbeitung bestimmt sind, zum Beispiel bei entsprechenden Materialien Risse oder dergleichen auf, die dazu führen, dass der Fügepunkt nicht den an ihn gestellten Anforderungen entspricht, was nachteilig ist bzw. zu Ausschussware führt.

Vorteilhafterweise ist es mit der vorgeschlagenen Fügewerkzeugeinheit insbesondere möglich, eine Fügeverbindung mit einem vergleichsweise sehr spröden Material herzustellen, z. B. eine Fügeverbindung zwischen einer harten und/oder spröden Werkstücklage und einer Werkstücklage aus einem vergleichsweise gut umformbaren bzw. weicheren Material herzustellen, bezogen auf ein übliches Umgebungstemperatur-Niveau z. B. im Bereich von 15 bis 30 Grad Celsius.

Es ist auch von Vorteil, dass z. B. sowohl das bewegbare Werkzeug, als auch das Werkzeuggegenelement eine zeitgleiche Bewegung weg vom Werkstück oder zum Werkstück hin ausführen. Vorteilhafterweise ist das Werkstück in diesem Fall durch ein separates Halteelement zwischen dem bewegbaren Werkzeug und dem Werkzeuggegenelement positioniert.

Der Niederhalter kann alternativ ausgebildet sein, alleinig als Strahlabschirmung und/oder alleinig zur Leitung des Lichtstrahls zu dienen. Der Lichtstrahl ist vorzugsweise ein Laserstrahl, wobei der Laserstrahl kontinuierlich und/oder gepulst sein kann. Die Lichtquelle ist vorzugsweise eine Laser-Lichtquelle bzw. ein Laser bzw. ein Festkörper-, Gas- oder Flüssigkeitslaser. Weiter kann das Licht des Lichtstrahls auch im sichtbaren, UV- und/oder IR-Bereich liegen. Vorteilhafterweise ist eine Wellenlänge des von der Lichtquelle bereitgestellten Lichts auf ein Absorptionsmaximum des zu bearbeitenden Materials des Werkstücks bzw. der Werkstücklage abgestimmt, so dass ein möglichst energieeffizienter Wärmeeintrag in das Werkstück durch das Licht der Lichtquelle realisiert ist.

Das Lichtleitungssystem ist vorzugsweise im Niederhalter derart ausgestaltet, dass das Lichtleitungssystem das Licht entlang des Lichtstrahls einhüllt, so dass das Licht in radialer Richtung zum Lichtstrahl nach außen durch das Lichtleitungssystem abgeschirmt ist. Das Lichtleitungssystem umfasst zum Beispiel eine Ausnehmung im Niederhalter. Innerhalb der Ausnehmung verläuft der Lichtstrahl. Der Niederhalter weist zum Beispiel darüber hinaus eine Aussparung auf, die als Unterbringung und Bewegungsraum für das bewegbare Werkzeug dient. Dies ist zum Beispiel ein Fügestempel-Kanal, wenn das bewegbare Werkzeug ein Fügestempel ist. Die Aussparung ist z. B. zylindrisch bei zylindrischer Außenform des Fügestempels. Die zentrale Längsachse der Aussparung fällt zum Beispiel mit der Bewegungsachse des bewegbaren Werkzeugs überein. Zu dieser Achse steht der Lichtstrahl geneigt größer 0° bzw. größer Null Winkelgrad. Demgemäß steht die Ausnehmung des Lichtleitsystems geneigt zur Aussparung. Die Ausnehmung des lichtführenden Lichtleitungssystems bzw. das Lichtleitungssystem im Niederhalter kann in die Aussparung münden, im Nahbereich einer Stirnseite bzw. nahe eines freien Endes des Niederhalters. Eine Austrittsöffnung des Lichtleitungssystems ist dann zum Beispiel in einer Wandung des Werkzeug-Kanals bzw. des Fügestempel-Kanals vorhanden. Die Austrittsöffnung des Lichtleitungssystems kann aber auch getrennt vom Kanal des Werkzeugs sein, also in der Stirnseite des Niederhalters zu einer Öffnung des Fügestempel-Kanals als weiter Öffnung vorhanden sein. Das Lichtleitungssystem trifft dann nicht auf den Bewegungskanal des Werkzeugs bzw. nicht auf den Fügestempel-Kanal. Die Ausnehmung und die Aussparung sind dann zwei nicht verbundene Hohlräume im Niederhalter bzw. nicht ineinander übergehend.

Das Lichtleitungssystem schließt auch eine Anordnung ein, wonach das Lichtleitungssystem außenseitig am Niederhalter vorhanden ist, zum Beispiel mittels einer geschlossenen Leitung wie z. B. mittels einer Leitung, die am Niederhalter außen aufliegend oder teils vertieft zu einer Außenseite einer Niederhalter-Oberfläche verläuft bzw. daran anliegend vorhanden ist. Denkbar ist auch, dass die Ausnehmung röhrenartig, z.B. als eine Röhre am Niederhalter vorhanden ist.

Denkbar ist auch, dass die Fügewerkzeugeinheit einen Niederhalter am Werkzeuggegenelement aufweist und das Lichtleitungssystem am Niederhalter des Werkzeuggegenelements ausgebildet ist.

Bevorzugterweise ist innerhalb des Niederhalters, vorzugsweise umfänglich zur Lichtleitungsachse vollständig geschlossen, die Ausnehmung des Lichtleitungssystems vorhanden, insbesondere eine zylindrische Ausnehmung, wobei entlang der Zylinderachse der Ausnehmung. z. B. der Längserstreckung der Ausnehmung, das Licht in Richtung des Werkstücks geleitet werden kann. Die Ausnehmung ist beispielsweise von Material des Niederhalters umgeben, das an die Ausnehmung heranreicht. Die Ausnehmung ist zum Beispiel als eine Bohrung, z. B. als eine Durchgangsbohrung am Niederhalter vorhanden. Denkbar ist jedoch auch, dass das Lichtleitungssystem eine Glasfaser aufweist und die Glasfaser am oder im Niederhalter festgelegt ist, der zum Beispiel teils hohl sein kann.

Der Betrieb der Fügewerkzeugeinheit erfolgt mit einer Kontrolleinheit, zum Beispiel ist die Kontrolleinheit ein Teil der Fügewerkzeugeinheit. Die Kontrolleinheit ist dazu ausgebildet, die Antriebseinheit zu steuern und/oder zu regeln, wobei die Kontrolleinheit dazu ausgebildet ist, die Lichtquelle und/oder eine Komponente des Lichtleitungssystems zu steuern und/oder zu regeln.

Weiter wird vorgeschlagen, dass die Kontrolleinheit der Fügewerkzeugeinheit dazu ausgebildet ist, zeitgleich mit dem Start der Bewegung des bewegbaren Werkzeugs oder zeitlich nach dem Start der Bewegung des bewegbaren Werkzeugs eine Bestrahlung oder eine Beleuchtung der Fügestelle des angeordneten Werkstücks mit dem Licht der Lichtquelle zu beenden. Hierdurch ist eine Fügezykluszeit vergleichsweise verkürzt. Es ist denkbar, dass vor dem Start der Bewegung des bewegbaren Werkzeugs eine Bestrahlung oder eine Beleuchtung der Fügestelle des angeordneten Werkstücks mit dem Licht der Lichtquelle beendet wird.

Beispielsweise ist die Kontrolleinheit dazu ausgebildet, zeitgleich mit dem Start der Bewegung des bewegbaren Werkzeugs oder zeitlich nach dem Start der Bewegung des bewegbaren Werkzeugs die Lichtquelle auszuschalten und damit eine Bestrahlung oder Beleuchtung der Fügestelle des angeordneten Werkstücks mit dem Licht der Lichtquelle zu beenden.

Beispielsweise ist bezogen auf einen Fügevorgang des Werkstücks durch die Fügewerkzeugeinheit die Fügewerkzeugeinheit ausgebildet, dass eine Bewegung des bewegbaren Werkzeugs in Richtung Werkzeuggegenelement gestartet wird und zeitgleich oder zeitlich danach eine Bestrahlung oder Beleuchtung der Fügestelle mit dem Licht der Lichtquelle beendet wird.

Vorstellbar ist weiterhin, dass die Fügewerkzeugeinheit eine Sensoreinheit aufweist, wobei die Fügewerkzeugeinheit dazu ausgebildet ist, mittels der Sensoreinheit zu detektieren, ob z. B. der Niederhalter in der Position am Werkstück ansteht. Die Sensoreinheit umfasst hierzu beispielsweise einen Drucksensor, welcher einen Staudruck im Inneren des Niederhalters detektiert.

Beispielsweise ist die Sensoreinheit dazu ausgebildet, zu ermitteln, ob der Niederhalter an der Position am Werkstück derart ansteht, dass mit dem Niederhalter durch dessen Anlage am Werkstück die Lichtstrahlung bzw. das Licht der Lichtquelle nach außen in einer Weise lichtdicht abschirmt, dass eine Gefährdung einer Person im Umgebungsbereich der Fügewerkzeugeinheit ausgeschlossen ist. Zum Beispiel detektiert die Sensoreinheit dabei mit einem Sensor bzw. einem Drucksensor der Sensoreinheit einen Staudruck eines Fluids wie Luft, das zwischen Niederhalter und Werkstück vorhanden bzw. eingeschlossen ist. Beispielsweise wird durch einen Einlass für das Fluid, bevor ein Aktivieren des Lichtstrahls erfolgt, das Fluid in einen Strömungskanal eingelassen. Der Strömungskanal für das Fluid wird beispielsweise zumindest teilweise vom Lichtleitungssystem gebildet bzw. von dem Lichtleitkanal des Lichtleitungssystems.

Der Sensor kann alternativ zum Beispiel eine Energiemenge, eine Temperatur oder eine Lichtmenge messen.

Beispielsweise prüft die Fügewerkzeugeinheit, insbesondere mittels der Kontrolleinheit, ob ein gemessener Sensorwert der Sensoreinheit in einem vorgegebenen Sollbereich bzw. Sicherheitsbereich sich befindet, bevor eine Bestrahlung oder Beleuchtung der Fügestelle des angeordneten Werkstücks mit dem Licht der Lichtquelle gestartet wird und/oder bevor eine Bewegung des bewegbaren Werkzeugs gestartet wird. Befindet sich der gemessene Sensorwert nicht ein dem vorgegebenen Sollbereich blockiert die Fügewerkzeugeinheit, insbesondere über die Kontrolleinheit, einen Start einer Bestrahlung oder Beleuchtung der Fügestelle des angeordneten Werkstücks mit dem Licht der Lichtquelle und/oder einen Start einer Bewegung des bewegbaren Werkzeugs.

Der Niederhalter ist in seiner Form vorteilhaft schlank bauend und vorteilhaft angepasst an die Unterbringung des Lichtleitungssystems darin. Beispielsweise weist der Niederhalter eine Außenseite mit einer Mantelseite auf, wobei die Mantelseite sich zwischen dem freien Ende und einem dem freien Ende abgewandten rückwärtigen Ende des Niederhalters erstreckt, wobei die Mantelseite einen ersten Teil-Bereich und einen zweiten Teil-Bereich umfasst, die sich jeweils über die axiale Länge des Niederhalters erstrecken, und wobei sich die Teilbereiche radial zur Fügeachse gegenüberliegen, wobei der erste Teil-Bereich eine flache Außenkontur aufweist, wobei in einem Querschnitt des Niederhalters senkrecht zur Fügeachse der erste Teil-Bereich in einem Winkelbereich von mindestens 10 Winkelgraden einen kleineren radialen Abstand zur Fügeachse aufweist als der radiale Abstand zur Fügeachse des zweiten Teil-Bereichs im gleichen Querschnitt.

Zum Beispiel weist ein Querschnitt eine Flächenform mit einer Umrandung der Fläche derart auf, dass der Schwerpunkt dieses Querschnitts versetzt ist zur Schnittstelle des Querschnitts mit der Fügeachse, insbesondere versetzt in Richtung des zweiten Teilbereichs.

Der betreffende Schwerpunkt ist versetzt zur Fügeachse, wobei ein erster Teilbereich diametral gegenüber liegt zum zweiten Teilbereich. Vorzugsweise liegen Punkte des ersten Teilbereichs diametral gegenüber von Punkten des zweiten Teilbereichs. Eine azimutale Erstreckung der Teilbereiche ist beispielsweise derart, dass ein dazugehöriger Winkelbereich des ersten Teil-Bereichs zum Beispiel bis kleiner 90 Winkelgrade überspannt.

Die Mantelseite der Außenseite des Niederhalters weist zum Beispiel im zweiten Teil-Bereich eine konvexe Außenform bzw. Außenkontur auf, wie z. B. eine erhabene Form. Innerhalb dieses Volumenbereichs bis zur Fügeachse oder einem Schnitt durch die Fügeachse ist vorzugsweise das Lichtleitungssystem untergebracht. Die den ersten Teil-Bereich umhüllende Außenform bzw. Außenkontur der Mantelseite ist außen z. B. flach bzw. so reduziert im Material, dass eine ausreichende aber zum Beispiel minimale Bauteilfestigkeit gewährleistet ist. Mit der abgeflachten Seite der Außenseite des Niederhalters ist es vorteilhaft möglich, auch an Engstellen an einem Werkstück bzw. in beengter Umgebung an Bauteilen, an der die Fügestelle eingerichtet werden soll, gut erreichbar sind mit dem vordersten Teil der Fügewerkzeugeinheit, der durch eine Stirnseite des Niederhalters abschließt.

Beispielsweise ist eine weitere, z.B. eine zweite Ausnehmung am Niederhalter vorhanden. Denkbar ist, dass die zweite Ausnehmung spiegelsymmetrisch zur ersten Ausnehmung am Niederhalter vorhanden ist. Bevorzugterweise verläuft die Spiegelachse parallel zu der Bewegungsachse des bewegbaren Werkzeugs. Verläuft beispielsweise die Bewegungsachse des bewegbaren Werkzeugs mittig durch den Niederhalter entspricht vorzugsweise die Bewegungsachse der Spiegelachse.

Beispielsweise sind die erste und die zweite Ausnehmung derart am Niederhalter ausgebildet, dass das Licht der Lichtquelle entlang der erste Ausnehmung auf das Werkstück geleitet wird, wenn der Niederhalter am Werkstück ansteht und dass das vom Werkstück reflektierte Licht der Lichtquelle entlang der zweiten Ausnehmung geleitet wird. Beispielsweise umfasst der Niederhalter eine Strahlenfalle oder ein Strahlensumpf, in welchem das reflektierte Licht eingefangen und absorbiert wird. Durch die Führung des Lichtstrahls entlang der ersten und der zweiten Ausnehmungen im Niederhalter kann auf eine Schutzkabine verzichtet werden.

Denkbar ist weiterhin, dass das Lichtleistungssystem einen Shutter bzw. einen optischen Verschluss aufweist, also zum Beispiel einen mechanischen oder elektronischen Verschluss. Beispielsweise ist eine Beleuchtung einer Fügestelle durch das Licht der Lichtquelle mittels des Shutters aktivierbar oder deaktivierbar. Zum Beispiel weist der Shutter ein bewegliches Element auf. Vorteilhafterweise ist der Shutter mittels der Kontrolleinheit ansteuerbar bzw. das bewegliche Element betätigbar. Das bewegliche Element, das zum Beispiel aus einem lichtundurchlässigen Material besteht, ist z. B. in den Weg des Lichtstrahls diesen blockierend einbringbar und wieder herausbewegbar.

Vorteilhafterweise ist der Niederhalter derart ausgebildet, dass im angeordneten Zustand eines Werkstücks an der Fügewerkzeugeinheit der Niederhalter derart an der Oberfläche des Werkstücks anstehend anordenbar ist, dass der Niederhalter die Fügestelle umschließt, sodass maximal 20% der Strahlungsleistung des Lichts zwischen Niederhalter und Oberfläche des Werkstücks nach außen abstrahlt. Das nach außen dringende Licht findet seinen Weg über wenigstens einen Spalt zwischen der Niederhalter-Stirnseite und der gegenüberliegenden Oberfläche des Werkstücks. Die maximal 20% der Strahlungsleistung des Lichts bezieht sich vorzugsweise auf die Lichtleistung, die an der Austrittsstelle des Lichtstrahls, vorne am Niederhalter, in Richtung der Oberfläche des Werkstücks austritt.

Der Niederhalter ist vorzugsweise so gestaltet, dass maximal 10% der Strahlungsleistung des Lichts zwischen Niederhalter und Oberfläche des Werkstücks nach außen abstrahlt, oder dass maximal 5% der Strahlungsleistung des Lichts zwischen Niederhalter und Oberfläche des Werkstücks nach außen abstrahlt oder sodass maximal 3% der Strahlungsleistung des Lichts zwischen Niederhalter und Oberfläche des Werkstücks nach außen abstrahlt, vorzugsweise dass 0% der Strahlungsleistung des Lichts zwischen Niederhalter und Oberfläche des Werkstücks nach außen abstrahlt.

In der Regel ist die vom Niederhalter kontaktierte Oberfläche des Werkstücks eben und flach ausgebildet. Daher ist es zum Beispielsweise ist eine dem Werkzeuggegenelement zugewandte Seite des Niederhalters, wie eine Stirnseite des Niederhalters, die in Anlage am Werkstück kommt bei angeordnetem Werkstück, ebenfalls bzw. entsprechend eben und flächig gestaltet. Vorzugsweise weist die Stirnseite eine vergleichsweise sehr geringe Rauhigkeit auf. Außerdem ist es vorteilhaft, wenn zumindest die Stirnseite des Niederhalters eine glatte ebene Oberfläche bereitstellt. Die Oberfläche der Stirnseite ist zum Beispiel geglättet bzw. poliert. Die Niederhalter-Stirnseite besteht bevorzugt aus einem mechanisch vergleichsweise widerstandsfähigen bzw. verformungsstabilen Material wie z. B. einem Hartmetall bzw. einem Hartstahlmaterial.

In der Praxis treten selbst bei in der Praxis besten Bedingungen geringe Anteile des Lichtstrahls als Streulicht auf im aufgesetzten Zustand des Niederhalters am Werkstück. Denn regelmäßig ist keine absolut plane Anlage von Abschnitten des Niederhalters und Abschnitten der Oberfläche des Werkstücks realisierbar bzw. erfolgt kein exakt senkrechtes Aufliegen des Niederhalters auf die Werkstückoberfläche. Damit treten in der Praxis regelmäßig Spaltbereiche mit geringer Spaltbreite zum Beispiel im Zehntelmillimeterbereich zwischen Niederhalter- bzw. Niederhalterstirnseitenoberfläche und Werkstückoberfläche im angeordneten Zustand am Werkstück auf. Anteile des Streulichts können durch einen Spalt zwischen Niederhalter bzw. dessen Stirnseite und der Oberfläche des Werkstücks nach außen treten in die Umgebung der Fügewerkzeugeinheit. Der Spalt kann aufgrund z. B. von Unebenheiten wie insbesondere punktuelle Vertiefungen oder Erhöhungen der beiden gegenüberliegenden Flächen am Niederhalter und dem Werkstück existieren und/oder aus einer nicht parallele Ausrichtung der sich gegenüberliegenden Flächen ergeben, z. B. zwischen Niederhalterstirnseite und Werkstückoberfläche.

Die für die Abstrahlung nach außen zugrundegelegte Strahlungsleistung ist zum Beispiel eine Strahlungsleistung, des Lichts, das an einer Öffnung des Lichtleitungssystem am Niederhalter austritt und in Richtung der Fügestelle gerichtet ist oder eine Strahlungsleistung des Lichts, das an der Fügestelle ankommt.

Die zugrundegelegte Strahlungsleistung kann alternativ eine mit der Lichtquelle bereitstellbare Strahlungsleistung zum Beispiel eine Nennleistung der Lichtquelle sein.

Als mögliche Maßnahme zur Begrenzung der nach außen tretenden Strahlungsleistung des Lichts auf maximal 20%, die zwischen Niederhalter bzw. dessen Stirnseite und gegenüberliegender Oberfläche des Werkstücks nach außen abstrahlt, ist eine Leistungslimitierung der mit der Lichtquelle erzeugten Lichtleistung möglich, z. B. über Einstellmittel der Lichtquelle. Vorzugsweise wird eine Leistungslimitierung derart eingerichtet, dass eine Abschirmung des Lichts nach außen von mindestens 80%, vorzugsweise von mindestens 95% erfolgt, bezogen auf eine Bezugsgröße bzw. eine Bezugs-Leistung des Lichts bzw. der Lichtstrahlung.

Es ergibt sich ein Vorteil, wenn das Lichtleitungssystem derart am Niederhalter vorhanden ist, dass der Lichtstrahl ausschließlich in einem Winkelbereich zwischen 5° bis 40° relativ zur Bewegungsachse des linear bewegbaren Werkzeugs auf die Fügestelle des Werkstücks einstrahlt. Damit kann ein konstruktiver und/oder herstellungstechnischer Vorteil erzielt werden.

Beispielsweise strahlt der Lichtstrahl in einem Winkelbereich zwischen 5° bis 40° relativ zur Bewegungsachse des linear bewegbaren Werkzeugs auf die Fügestelle des Werkstücks ein, oder beispielsweise zwischen 5° bis 30°, oder beispielsweise zwischen 10° bis 30°, oder beispielsweise zwischen 10° und 40° oder beispielsweise zwischen 5° und 10° relativ zur Bewegungsachse des bewegbaren Werkzeugs auf die Fügestelle des Werkstücks ein. Beispielsweise strahlt der Lichtstrahl in einem Winkel von 4°, 4,5°; 5°; 5,5°; 6°; 7°; 8°; 9° oder 10° relativ zur Bewegungsachse des bewegbaren Werkzeugs auf die Fügestelle des Werkstücks ein.

Denkbar sind Einstellmittel zur Einstellung des Winkelbereichs, unter dem der Lichtstrahl relativ zur Bewegungsachse des linear bewegbaren Werkzeugs angestellt ist z. B. zwischen größer Null und kleiner 40 Winkelgraden.

Vorzugsweise ist der Einfallswinkel so gering wie möglich bzw. so steil wie möglich zur Bewegungsachse des linear bewegbaren Werkzeugs.

Vorzugsweise ist ein Durchmesser des Lichtstrahls wie der Durchmesser eines Laserstrahls einstellbar. Hierfür sind vorzugsweise an der Fügewerkzeugeinheit Einstellmittel zur beispielsweise manuellen Einstellung des Laserdurchmesser vorgesehen.

Gemäß einer vorteilhaften Modifikation ist das linear bewegbare Werkzeug als ein Fügestempel ausgebildet. Der Fügestempel ist zumindest abschnittsweise im Niederhalter geführt beweglich. Der Niederhalter umschließt den Fügestempel umfänglich über eine axiale Länge des Fügestempels. Der Fügestempel dient zum Fügen des Werkstücks, das aus einem umformbaren Material besteht. Der Fügestempel ist vorzugsweise ein Fügestempel zum Clinchen oder Durchsetzfügen, wobei, im Zusammenwirken mit dem Werkzeuggegenelement wie z. B. einer Clinchmatrize, der Fügestempel das Material des Werkstücks verformt unter einer angetriebenen Bewegung des Fügestempels in der Bewegungsrichtung des Fügestempels zum Werkzeuggegenelement hin. Demgemäß ist die Fügewerkzeugeinheit vorzugsweise eine Clinchwerkzeugeinheit.

Beim Clinchen ist das Werkstück in der Regel zwei- oder mehrlagig.

Zum Setzen eines Verbindungs- oder Funktionselements am Werkstück wirkt der Fügestempel über das jeweilige Element auf den mittels des Lichtstrahls erweichten Bereich des sich dabei verformenden Werkstücks ein.

Denkbar ist auch, dass das linear bewegbare Werkzeug als ein Matrizenwerkzeug, im Unterscheid zu einem Fügestempelwerkzeug, oder als Teil einer Matrizeneinheit ausgebildet ist. Das linear bewegbare Werkzeug ist beispielsweise ein Matrizen-Werkzeugteil wie z. B. ein Innenteil der Matrizeneinheit, das von z. B. einer Matrizenauflage der Matrize umschlossen ist. Die Matrizenauflage ist zum Beispiel als Niederhalter der Matrizeneinheit ausgebildet. Im Niederhalter der Matrizeneinheit ist bevorzugt das Lichtleitungssystem wie oben zum Niederhalter beschrieben unterbringbar.

Ein anderer Vorteil liegt darin, dass das Werkzeuggegenelement ein zweites bewegbares Werkzeug aufweist. Das zweite bewegbare Werkzeug ist demnach ein zu einem ersten bewegbaren Werkzeug im Niederhalter, zum Beispiel einem Fügestempel, weiteres bzw. das zweite bewegbare Werkzeug. Beispielsweise ist das zweite bewegbare Werkzeug insbesondere ausschließlich linear bewegbar vorhanden. Zum Beispiel ist das zweite bewegbare Werkzeug von einem zweiten Niederhalter umgeben, zum Beispiel auf einer Matrizenseite bzw. als Teil einer Matrizeneinheit, wenn das Werkzeuggegenelement eine Matrizeneinheit umfasst. Das erste bewegbare Werkzeug ist von zum Beispiel einem ersten Niederhalter umgeben.

Das Lichtleitungssystem ist am bzw. im ersten und/oder zweiten Niederhalter vorhanden. Damit lässt sich ein Werkstück von einer ersten Seite, von einer zweiten Seite oder beidseitig mit dem Lichtstrahl beaufschlagen, zum Beispiel erwärmen mit einem Laser-Lichtstrahl. Damit ist es vorteilhaft möglich, ein Werkstück, das verschiedene Materialien kombiniert umfasst, mit Lichtstrahlung zu erwärmen und zu erweichen vor dem Fügen.

Es ist außerdem von Vorteil, wenn am Werkzeuggegenelement ein weiteres, zum Beispiel zweites, Lichtleitungssystem vorhanden ist, um Licht in Richtung einer weiteren Oberfläche des Werkstücks zu leiten, wobei das Werkstück zumindest mit einem Abschnitt der weiteren Oberfläche am Werkzeuggegenelement aufliegt. Damit ist es effektiv möglich, eine gewünschte bzw. gegenüber einer alleinigen bzw. einseitigen Lichtbestrahlung über den Niederhalter noch größere Energiemenge bzw. Lichtmenge auf das Werkstück im Bereich der Fügestelle aufzubringen. Auch ist es möglich, verglichen zur alleinigen Lichtbestrahlung von der Seite des ersten Lichtleitungssystem bzw. des Niederhalters aus, in kürzerer Zeit eine entsprechende Energiemenge dem Werkstück zuzuführen. Die zur weiteren Oberfläche des Werkstücks gehörende Werkstück-Seite ist vorteilhaft damit ebenfalls erwärmbar, was für eine Verformung von Material des Werkstücks auf der Seite des Werkzeuggegenelements durch z. B. Eindrücken des erwärmten Materials in das Werkzeuggegenelement vorteilhaft ist. Auch führt der zusätzliche Energieeintrag auf der Werkzeuggegenelement-Seite mit einem Anteil der eingebrachten Energie zur anhaltenden bzw. weitergehenden Erwärmung der Seite des Werkstücks, an welcher der Niederhalter in Anlage ist, was durch Wärmeleitung innerhalb des Werkstücks erfolgt.

Durch in einer zum Erwärmen des Werkstücks zur Verfügung stehenden z. B. eng begrenzten Einwirkzeit kann eine vergleichsweise stärkere Erwärmung erfolgen und einem unerwünschten zu schnellen Abkühlen des Werkstücks untere einen Grenz-Temperaturwert im Bereich der Fügestelle nach dem Abschalten der Lichtbestrahlung, bis zum Verformungsbeginn, entgegengewirkt werden.

Eine Erwärmung des Werkstücks auf der Werkzeuggegenelement-Seite ist bei einem vergleichsweise spröden Material auf der Seite des Werkzeuggegenelements bzw. beim Fügen bzw. Verformen eines zu Rissbildung neigenden Materials auf dieser Seite von Vorteil.

Die weitere Oberfläche des Werkstücks ist demnach eine Seite, die z. B. dem Werkzeuggegenelement zugewandt ist, zum Beispiel eine rückseitige Oberfläche des Werkstücks, die am Werkzeuggegenelement vor und beim Bearbeiten durch die Fügewerkzeugeinheit in Anlage kommt. Die rückseitige Oberfläche des Werkstücks ist einer vorderseitigen Oberfläche des Werkstücks gegenüberliegend, wobei an der vorderseitigen Oberfläche des Werkstücks der Niederhalter in Anlage bringbar ist bzw. bei der im am Werkstück angeordneten Zustand der Fügewerkzeugeinheit der Niederhalter in Anlage ist. Dies ist jeweils bezogen auf den Bereich des Werkstücks, der die Fügestelle umfasst, die nach der Bearbeitung des Werkstücks durch die Fügewerkzeugeinheit existiert.

Das Werkzeuggegenelement ist zum Beispiel als Matrizeneinheit ausgestaltet mit einem bewegbaren oder nicht bewegbaren Werkzeug bzw. Matrizen-Werkzeug der Matrizeneinheit und einer Matrizenauflage. Die Matrizenauflage ist zum Beispiel ein das Matrizen-Werkzeug umgebender Teil, zum Beispiel ein Matrizen-Niederhalter mit dem Lichtleitungssystem. Die Matrizenauflage ist beispielsweise Matrizen-Niederhalter entsprechend dem Niederhalter bzw. entsprechend den Eigenschaften des gegenüberliegenden Niederhalters wie z. B. des Fügestempel-Niederhalters ausgebildet. Der Matrizen-Niederhalter bzw. die Matrizenauflage weist vorzugsweise ein Lichtleitungssystem auf, das dazu ausgebildet ist, einen Lichtstrahl eines Lichts in Richtung einer dem Werkzeuggegenelement zugewandten Fügestelle des Werkstücks zu leiten, wenn das Werkstück an der Fügewerkzeugeinheit angeordnet ist, wobei das Lichtleitungssystem derart an der Matrizenauflage vorhanden ist, dass der Lichtstrahl ausschließlich in einem Winkel größer 0° zu einer Bewegungsachse des Werkzeugs des Werkzeuggegenelements auf die Fügestelle einstrahlt, wobei das Lichtleitungssystem der der Matrizenauflage das Licht entlang seines Lichtstrahls nach außen lichtdicht abschirmt. Das Werkstück weist zum Beispiel eine dem Werkzeug zugewandte Fügestelle wie eine dem Fügestempel-Werkzeug zugewandte Fügestelle auf z. B. auf einer Werkstück-Oberseite und eine gegenüberliegende Fügestelle, die dem Werkzeuggegenelement zugewandt ist, z. B. auf einer Werkstück-Unterseite des Werkstücks.

Vorteilhafterweise ist der Niederhalter als ein Niederhalter einer Fügestempeleinheit oder als ein Niederhalter einer Matrizeneinheit ausgebildet. Damit kann sehr flexibel angepasst gearbeitet werden. Es ist möglich, vorzugsweise wahlweise beidseitig oder einseitig die Lichtstrahleinwirkung am Werkstück einzurichten. Damit kann zum Beispiel gleichzeitig beidseitig, also z. B. oberseitig und unterseitig das Werkstück bzw. die jeweilige Oberfläche erwärmt bzw. erweicht werden, was unmittelbar vor dem Fügevorgang erfolgt, da andernfalls eine Abkühlung und eine damit einhergehende Erhärtung des Fügestellenmaterials stattfindet. Mit dem Lichtleitungssystem im Niederhalter der Fügestempeleinheit oder der im Niederhalter der Matrizeneinheit ist gezielt, kontrolliert und sicher Licht bzw. Lichtstrahlung auf einen Bereich der späteren Fügestelle auf der Oberseite und/oder auf der Unterseite des Werkstücks aufbringbar. Gegenüber einer einseitigen Werkstück-Bestrahlung kann zum Beispiel vergleichsweise mehr Energie in der gleichen Zeit in das Werkstück im Bereich der Fügestelle eingebracht werden, wenn beidseitig und gleichzeitig bestrahlt wird. Wenn das Werkstück aus mehreren Werkstücklagen besteht, zum Beispiel zwei- oder mehrlagig ist, aus jeweils unterschiedlichen Materialen der jeweiligen Werkstücklage, ist es außerdem vorteilhaft möglich, sehr flexibel und abgestimmt auf die jeweilige Materialpaarung bzw. -kombination das Werkstück beidseitig oder einseitig bzw. nur von der Seite der Fügestempeleinheit oder nur von der Seite der Matrizeneinheit oder von beiden Seiten mit Energie zu beaufschlagen bzw. zu erwärmen.

Grundsätzlich ist das Werkstück mit der jeweiligen Werkstücklage zwischen dem Werkzeug und dem Werkzeuggegenelement vorhanden bzw. zwischen der Stempeleinheit und der Matrizeneinheit vorhanden. Da die technologischen Eigenschaften der jeweiligen Werkstücklagen aufgrund der möglichen unterschiedlichen Materialien sich teils stark unterscheiden können, ist die flexible einseitige oder beidseitige Bestrahlung vorteilhaft. Aber auch bei vergleichbaren Materialeigenschaften von der Werkstücklage an der Fügestempeleinheit und der Matrizeneinheit ist die beidseitig mögliche Niederhalteranordnung mit dem jeweiligen Lichtleitungssystem von Vorteil. Insbesondere wegen der vergleichsweise hohen Energiemenge, die in kurzer Zeit nötig ist. Vorzugsweise ist jeweils eine dazugehörige bzw. fügestempelseitige und/oder matrizenseitige Lichtquelle und ein jeweils dazugehöriges Lichtleitungssystem im jeweiligen Niederhalter dafür vorgesehen. Vorteilhaft lassen sich Taktzeiten verkürzen bei der Werkstück-Bearbeitung, wenn eine beidseitige Erwärmung des Werkstücks erfolgt.

Ein Vorteil ist darin zu sehen, dass das Werkzeuggegenelement als eine Matrizeneinheit ausgebildet ist und der Niederhalter mit dem bewegbaren Werkzeug Bestandteil einer Fügestempeleinheit ist. Damit kann ein bewährtes z. B. C-Bügel-Werkzeug mit Stempel- und Matrizeneinheit optimiert bzw. mit dem Lichtleitungssystem ausgestattet sein. Damit lässt sich zum Beispiel ein Clinch- oder Nietwerkzeug für Werkstücke aus erweiterten Materialien vorteilhaft nutzen, die bislang nicht damit bearbeitbar waren.

Denkbar ist auch, dass das Werkzeuggegenelement als eine Fügestempeleinheit ausgebildet ist und der Niederhalter mit dem bewegbaren Werkzeug Bestandteil einer Matrizeneinheit ist.

Die Erfindung richtet sich vorteilhafterweise auf eine Werkzeugzange mit einer Fügewerkzeugeinheit nach einem der wie oben beschriebenen Ausgestaltungen und mit einem Werkzeugbügel. Vorzugsweise umfasst die Werkzeugzange einen C-Bügel.

Denkbar ist, dass die Werkzeugzange als eine Clinch-, Füge- und/oder Prägezange ausgebildet ist. Denkbar ist auch, dass die Werkzeugzange als eine Halbhohlstanznietzange und/oder als eine Vollstanznietzange vorhanden ist.

Vorteilhaft ist die Ausbildung der Werkzeugzange mit dem Niederhalter und dem Lichtleitungssystem vergleichsweise einfach möglich. Zum Beispiel kann eine bekannte Werkzeugzange wirtschaftlich und technisch vorteilhaft ausgebildet werden. Vorteilhafterweis bleibt die Grundkonstruktion der bekannten Werkzeugzange erhalten. Der Niederhalter und die Zuführung des Lichtstrahls müssen dann eingerichtet werden. Weitere Komponenten betreffen z. B. eine Lichtquelle, Leitungs- und Zuführkomponenten für das Licht und weiterer Betriebsmittel zum Beispiel zur Kühlung und Reinigung, oder Sicherheitskomponenten. Solche Komponenten sind zum Beispiel entfernt von der Fügestempeleinheit und der Matrizeneinheit anordenbar.

Zum Beispiel kann mit einem Gas- bzw. Luftstrom, der in oder entlang der Fügewerkzeugeinheit strömt, die Fügewerkzeugeinheit im Bereich des Lichtleitungssystems bzw. die Leitung des Lichtleitungssystem durchspült bzw. beaufschlagt werden, um z. B. Verschmutzungen zu minimieren bzw. zu beseitigen oder zur Kühlung von sich aufgrund des Lichtstrahls erwärmenden Bereichen des Niederhalters. Dies kann vor und/oder während und/oder nach der Lichtdurchführung durch das Lichtleitungssystem erfolgen.

Auch wird ein Fügevorgang eines Werkstücks durch eine Fügewerkzeugeinheit vorgeschlagen, beispielsweise ein Fügevorgang eines Werkstücks durch eine Fügewerkzeugeinheit nach einer der vorgegangen ausgeführten Ausführungsformen, wobei der Fügevorgang folgenden Verfahrensschritte aufweist:
- Anordnen eines zu bearbeitenden Werkstücks an die Fügewerkzeugeinheit
- Bewegen eines Niederhalters der Fügewerkzeugeinheit relativ zu einem Werkzeuggegenelement der Fügewerkzeugeinheit bis zu einer Position, an welcher der Niederhalter und das Werkzeuggegenelement das Werkstück berühren
- Halten des Niederhalters an der Position
- Starten einer Bestrahlung oder einer Beleuchtung einer Fügestelle des Werkstücks mit einem Licht einer Lichtquelle der Fügewerkzeugeinheit, wenn der Niederhalter die Position erreicht hat.

Weiter wird vorgeschlagen, dass der Fügevorgang einen der folgenden weiteren Verfahrensschritte umfassen kann:
- Detektion der Position des Niederhalters durch eine Sensoreinheit der Fügewerkzeugeinheit
- Prüfen durch eine Kontrolleinheit des Fügewerkzeugs, basierend auf der Detektion der Sensoreinheit, ob der Niederhalter die Position erreicht hat
- Starten einer Bewegung eines bewegbaren Werkzeugs der Fügewerkzeugeinheit in Richtung der Fügestelle des Werkstücks, um das Werkstück zu fügen
- Beenden der Beleuchtung oder der Bestrahlung der Fügestelle des Werkstücks zeitgleich mit dem Start der Bewegung des bewegbaren Werkzeugs der Fügewerkzeugeinheit in Richtung der Fügestelle des Werkstücks oder zeitlich nach dem Start der Bewegung des bewegbaren Werkzeugs der Fügewerkzeugeinheit in Richtung der Fügestelle des Werkstücks
- Prüfen durch die Fügewerkzeugeinheit, ob beim Fügevorgang des Werkstücks durch das bewegbare Werkzeug die Beleuchtung oder die Bestrahlung der zu fügenden Stelle des Werkstücks beendet ist
- Fügen des Werkstücks durch das bewegbare Werkzeug, bevor der Niederhalter von der Position wegbewegt wird.
- Wegbewegen des Niederhalters von der Position, nachdem eine Bewegung des bewegbaren Werkzeugs in Richtung der zu fügenden Stelle des Werkstücks gestartet wurde
- Prüfen durch die Fügewerkzeugeinheit, ob die Beleuchtung oder die Bestrahlung der zu fügenden Stelle des Werkstücks beendet ist, bevor der Niederhalter von der Position wegbewegt wird.

Hierdurch ist zum einen eine Sicherheitsfunktion bereitgestellt, insbesondere um eine Gefährdung eines Mitarbeiters auszuschließen und zum anderen kann hierdurch eine insbesondere unerwünschte Erwärmung des bewegbaren Werkzeugs kontrolliert werden.

### Figurenbeschreibung

Ein Ausführungsbeispiel wird anhand der nachstehenden Zeichnungen unter Angabe weiterer Einzelheiten und Vorteile näher erläutert.

Es zeigen:
Fig. 1 eine perspektivische Ansicht von schräg oben auf eine Werkzeugzange mit einer Fügewerkzeugeinheit,
Fig. 2 eine perspektivische Ansicht eines Teils der Fügewerkzeugeinheit,
Fig. 3 eine weitere perspektivische Ansicht des Teils der Fügewerkzeugeinheit gemäß Fig. 2,
Fig. 4 eine Schnittansicht eines Teils der Fügewerkzeugeinheit gemäß Fig. 1, wobei die Fügewerkzeugeinheit mit einem Niederhalter und einem Werkzeuggegenelement an einem Werkstück anliegt und wobei ein Verlauf eines Lichtstrahls angedeutet ist,
Fig. 5 eine Schnittansicht der Anordnung gemäß Fig. 4, wobei ein Verlauf einer Luftströmung angedeutet ist,
Fig. 6 eine Schnittansicht eines Teils der Fügewerkzeugeinheit mit Pyrometer,
Fig. 7 eine Schnittansicht der Anordnung gemäß Fig. 4 und 5, wobei am Werkstück eine Fügeverbindung hergestellt ist,
Fig. 8 eine Schnittansicht der Anordnung gemäß Fig. 4, 5 und 7 in Ausgangsposition nach der Herstellung der Fügeverbindung.

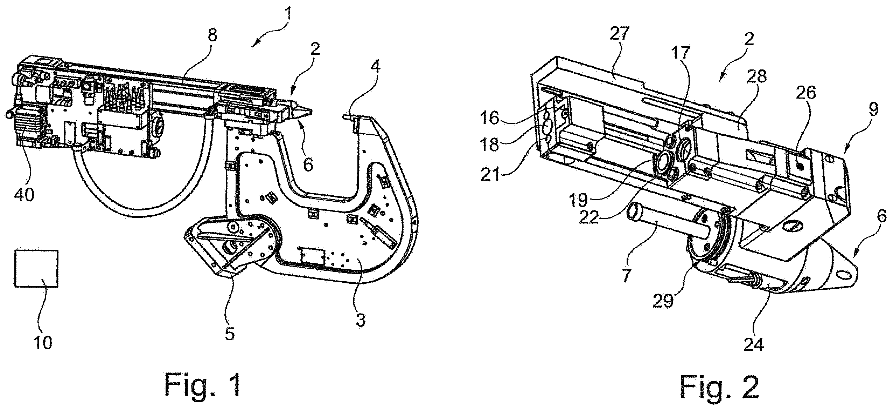

In Figur 1 ist eine Werkzeugzange 1 mit einer Fügewerkzeugeinheit 2 dargestellt. Die Werkzeugzange 1 weist einen Werkzeugbügel 3 auf, wobei an dem Werkzeugbügel 3 die Fügewerkzeugeinheit 2 bzw. ein Werkzeuggegenelement 4 der Fügewerkzeugeinheit 2angeordnet ist. Der Werkzeugbügel 3 ist vorzugsweise als C-Bügel ausgestaltet und kann beispielsweise über ein Verbindungselement 5 z. B. an einem in Figur 1 nicht dargestellten Roboterarm befestigt werden.

An der Fügewerkzeugeinheit 2 ist ein Werkzeuggegenelement 4, ein Niederhalter 6, ein bewegbares Werkzeug 7 (s. Fig. 2), eine Antriebseinheit 8, eine Lichtquelle 10 und eine Kontrolleinheit 40 ausgebildet. Eine Verbindung der Lichtquelle 10 zur restlichen Fügewerkzeugeinheit 2 ist in Fig. 1 nicht dargestellt.

Die Antriebseinheit 8 kann als ein elektrischer, ein pneumatischer, ein hydraulischer oder ein hydro-pneumatischer Antrieb ausgebildet sein. Die Antriebseinheit 8 ist beispielsweise mit dem Werkzeugbügel 3 verbunden.

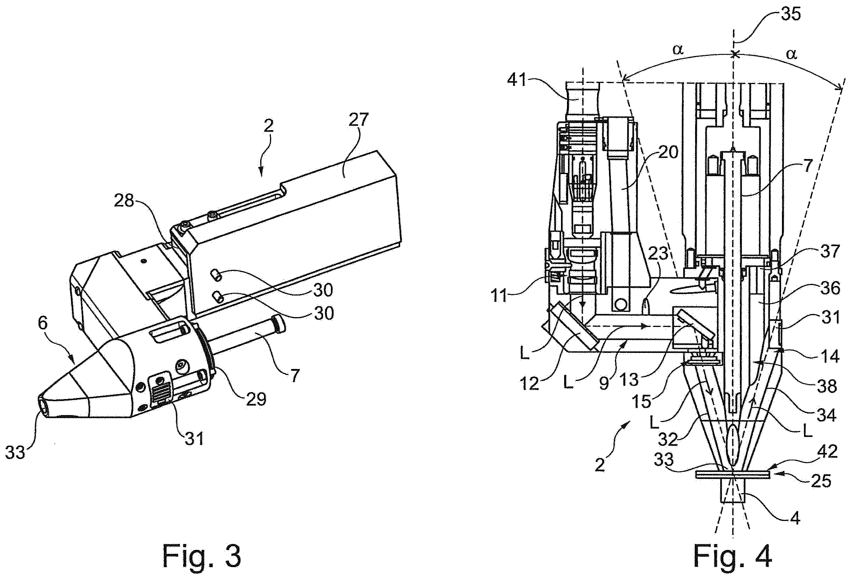

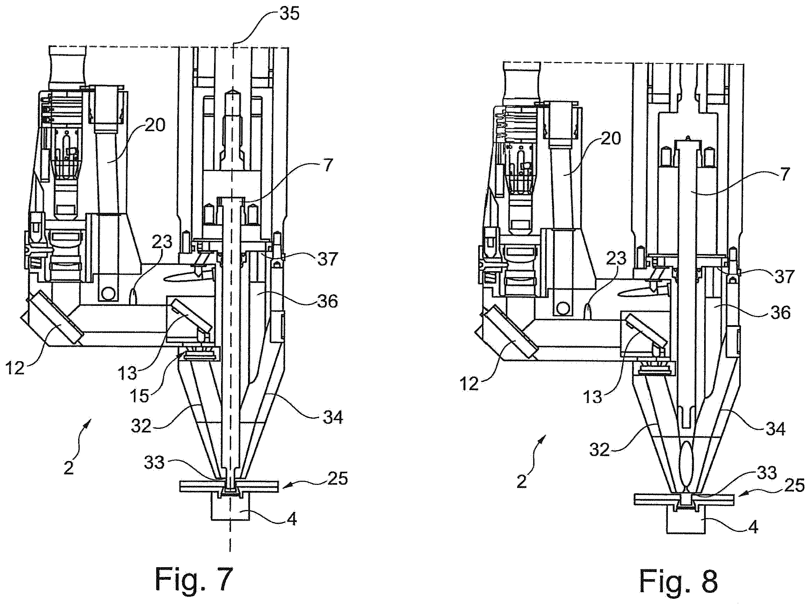

Beispielswiese sind am Niederhalter 6 das bewegbare Werkzeug 7, zum Beispiel ein Füge- bzw. Clinchstempel, ein Pyrometer 24 und ein Lichtleitungssystem 9 angeordnet. Das Lichtleitungssystem 9 umfasst einen Kollimator 11, einen ersten Spiegel 12, einen zweiten Spiegel 13, eine Strahlenfalle 14 bzw. einen Strahlensumpf und ein Schutzglas 15 (s. Fig. 4, 7). Beispielsweise ist die Lichtquelle 10 als eine Laser-Lichtquelle bzw. als ein Laser, z. B. als ein Faserlaser ausgebildet. Der Kollimator 11 ist vorzugsweise derart ausgestaltet, dass ein kollimierter Lichtstrahl erzeugt wird, zum Beispiel ein kollimierter Laserstrahl erzeugt wird. Beispielsweise werden die Lichtstrahlen der Lichtquelle 10 zunächst aufgeweitet und zumindest annähernd parallel zueinander ausgerichtet. Der erste Spiegel 12 ist beispielsweise verstellbar, so dass die Position eines Lichtstrahls der Lichtquelle 10 bzw. der von diesem angestrahlte Bereich auf einem zu bearbeitenden Werkstück 25 eingestellt werden kann. Der zweite Spiegel 13 ist vorzugsweise positionsfest an der Fügewerkzeugeinheit 2 angeordnet. Das Schutzglas 15 bildet beispielsweise eine Trennstelle zwischen den Optiken bzw. den Spiegeln 12, 13 und Kollimator 11 des Lichtleitungssystems 9 und dem Niederhalter 6. Weiter kann der Strahlendurchmesser des Lichtstrahls durch ein Verstellelement 26 an der Außenseite der Fügewerkzeugeinheit 2 verändert bzw. eingestellt werden. Am Ende der Strahlenfalle 14 bzw. des Strahlensumpfs ist bevorzugterweise ein Kühlkörper wie z. B. eine Kühlplatte 31 ausgebildet, die zur Kühlung von Bereichen der Fügewerkzeugeinheit 2 kühlt bzw. die Strahlenfalle 14 bzw. den Strahlensumpf und daran angrenzende Flächen kühlt. Die Kühlplatte 31 ist vorzugsweise an einer Außenseite des Niederhalters 6 lösbar angeordnet, somit kann die Kühlplatte 31 z.B. bei Verschleiß oder Verschmutzung ausgetauscht und/oder gereinigt werden.

Die Fügewerkzeugeinheit 2 weist vorzugsweise Steckplätze 16, 17 auf, um die Lichtquelle 10 an der Fügewerkzeugeinheit 2 anzukoppeln z. B. anzustecken und abzunehmen. Beispielsweise sind an der Fügewerkzeugeinheit auch Steckplätze 18, 19 für Leitungen wie eine Absaugleitung 20 und Steckplätze 21, 22 für einen Einlass 23 vorgesehen (s. Fig. 8), damit ein Fluid am Einlass 23 einströmt bzw. an der Absaugleitung 20 abgesaugt werden kann. Beispielsweise ist das Fluid ein Gas, z. B. Luft, insbesondere im Idealfall von Partikeln gereinigte Luft. Beispielsweise ist das Fluid als ein gereinigtes Gas, frei von Partikeln vorhanden. Denkbar ist auch, dass das Fluid ein spezielles Gas, wie z. B. Stickstoff oder Kohlendioxid ist.

Eine standardmäßige Werkzeugzange z. B. eine Clinch-Zange kann nachträglich mit einem Teil der Fügewerkzeugeinheit 2, insbesondere mit einem Niederhalter 6 und einem Lichtleitungssystem 9, ausgestattet werden, z. B. indem der Niederhalter 6 und das Lichtleitungssystem 9 mit der Antriebseinheit 8, welche vorzugsweise an einem Werkzeugbügel 3 angeordnet ist, verbunden werden. Dafür weist vorzugsweise die Fügewerkzeugeinheit 2 ein Befestigungselement 27 auf, wobei ein Teil der Fügewerkzeugeinheit 2, insbesondere der Teil der Fügewerkzeugeinheit 2, an dem die Steckplätze 16, 17, 18, 19, 21, 22 ausgebildet sind, durch das Befestigungselement 27 mit der Antriebseinheit 8 verbunden werden kann. Weiter weist der Niederhalter 6 für die Verbindung mit der Antriebseinheit 8 ein Anbindungselement 29 auf. Das Befestigungselement 27 ist vorzugsweise aus einem plattenförmigen Material gebildet, insbesondere aus einem Metallmaterial. Das Befestigungselement 27 kann durch Befestigungsmittel 30, z. B. Schraubmittel mit Schrauben, mit der Antriebseinheit 8 verbunden werden. An dem Befestigungselement 27 ist beispielsweise ein Sicherheitsschalter 28 angeordnet.

In den Figuren 4, 5, 6, 7, und 8 ist eine Schnittansicht eines Teils der Fügewerkzeugeinheit 2 dargestellt. Von der Lichtquelle 10 koppelt ein Lichtstrahl der Lichtquelle 10 am Lichtleitungssystem 9 im Bereich 41 ein. Der Verlauf des Lichtstrahls ist in Fig. 4 schematisch durch Pfeile L dargestellt. Der Lichtstrahl gelangt z. B. von der in Fig. 4 nicht dargestellten Lichtquelle zum Bereich 41 und weiter zum Kollimator 11, wobei der Lichtstrahl anschließend beispielsweise am ersten Spiegel 12 und am zweiten Spiegel 13 reflektiert wird und beispielhaft durch das Schutzglas 15 zum Niederhalter 6 gelangt. Am Niederhalter 6 ist eine erste Ausnehmung 32 ausgebildet, wobei die erste Ausnehmung 32 beispielsweise eine Bohrung im Niederhalter 6 ist. Beispielsweise gelangt der Lichtstrahldurch die erste Ausnehmung 32 zu einer Aussparung 33, welche an einem werkstückseitigen Ende des Niederhalters 6 bei dessen Stirnseite offen ausgebildet ist. Liegt der Niederhalter 6 an einem Werkstück 25 auf, wird der Lichtstrahl an einer vorzugsweise metallenen Werkstückoberfläche 42 des Werkstücks 25 reflektiert, abgesehen von vom Material des Werkstücks absorbierten Anteilen des Lichtstrahls und gelangt in eine zweite Ausnehmung 34, welche im Niederhalter 6, z.B. als Bohrung, ausgebildet ist. Entlang und/oder am Ende der zweiten Ausnehmung 34 ist die Strahlenfalle 14 bzw. der Strahlensumpf ausgebildet, so dass die vom Werkstück 25 reflektierten Lichtstrahlen in der Strahlenfalle 14 bzw. dem Strahlensumpf aufgenommen und absorbiert werden.

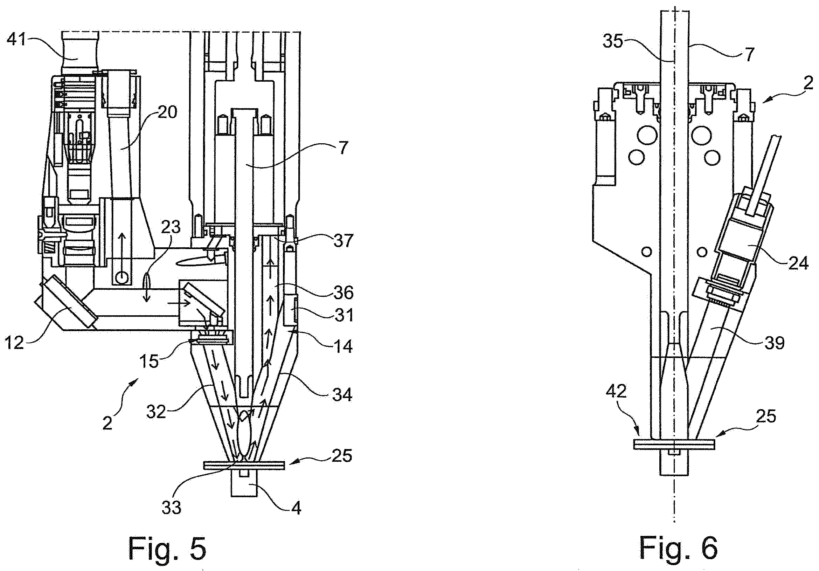

Beispielsweise ist am Niederhalter 6 eine weitere Bohrung für das bewegbare Werkzeug 7 vorgesehen, so dass das bewegbare Werkzeug 7 linear entlang einer Bewegungsachse 35 in Richtung des Werkstücks 25 bewegt werden kann. Die Bohrung und die Ausnehmungen 32, 34 gehen z. B. ineinander über. Eine Bewegungsachse 35 verläuft vorzugsweise entlang einer Längserstreckung des bewegbaren Werkzeugs 7 (s. Fig. 6). Weiter verläuft die Bewegungsachse 35 beispielsweise mittig durch das bewegbare Werkzeug 7. Eine Längsachse der ersten Ausnehmung 32 bzw. der zweiten Ausnehmung 34 ist beispielsweise in einem Winkelbereich α zwischen 5° bis 40° relativ zur Bewegungsachse 35 des bewegbaren Werkzeugs 7 an dem Niederhalter 6 vorhanden. Bevorzugterweise ist die zweite Ausnehmung 34 spiegelsymmetrisch zur ersten Ausnehmung 32 ausgestaltet, wobei die Bewegungsachse 35 beispielsweise Bestandteil einer Spiegelebene ist bzw. die Speiegelebene die Bewegungsachse ihrer Länge nach schneidet.

Beispielsweise bilden Teile des Lichtleitungssystems 8 einen Strömungskanal 38. Zum Beispiel bilden die erste Ausnehmung 32 und die zweite Ausnehmung 34 des Lichtleitungssystems 8 und die Aussparung 33 einen Teil des Strömungskanals 38. Die Aussparung 33 weist in Richtung der Bewegungsachse 35 eine Tiefe von wenigen Millimetern auf, zum Beispiel zwischen 1 bis 7 Millimeter. Beispielsweise verläuft der Strömungskanal 38 hauptsächlich entlang des Lichtleitungssystems 8 bzw. fällt mit diesem zusammen, wobei der Strömungskanal 38 erst nach dem Kollimator 11 anfängt. Weiter weist der Strömungskanal 38 eine weitere, zweite Aussparung 36 auf, die vorzugsweise als Bohrung ausgebildet ist. Beispielsweise schließt die zweite Aussparung 36 an einem Abschnitt der zweiten Ausnehmung 34 an und verläuft parallel zur Bewegungsachse 35 des bewegbaren Werkzeugs 7. Das Fluid, z. B. Luft, gelangt über den Einlass 23 in den Strömungskanal 38 und kann entlang des bzw. innerhalb des Strömungskanals 38 strömen. Beispielsweise wird das Fluid im Bereich, in Strömungsrichtung betrachtet, nach dem Kollimator 11 bis zum fluid-undurchlässigen Schutzglas 15 gestaut, da das Fluid nur an den Außenseiten des Schutzglases 15 vorbei, durch einen Verengungsbereich im Strömungskanal, zur ersten Ausnehmung 32 strömen kann. Dadurch wird in dem Bereich nach dem Kollimator 11 bis zum Schutzglas 15 ein Überdruck erzeugt, zumindest solange das Fluid durch den Einlass 23 einströmt. Beispielsweise strömt Fluid dauerhaft über den Einlass 23 ein, um zum Beispiel Elemente von Optiken bzw. die Spiegel 12, 13 zu überströmen und sauber zu halten. Das Fluid kann aus dem Strömungskanal 38 durch die Aussparung 33 und einen zweiten Auslass 37 strömen. Der zweite Auslass 37 ist vorzugsweise im Bereich eines Endes bzw. am Ende der Aussparung 36 angeordnet, wobei der zweite Auslass 37 beispielsweise mit der Absaugleitung 20 verbunden ist, so dass das in die Aussparung 36 einströmende Fluid am Ende der Aussparung 36 abgesaugt wird. Zum Beispiel ist am Strömungskanal 38 eine Absaugleitung 20 angeordnet, aus welcher das Fluid aus dem Strömungskanal 38 absaugbar ist.

Zum Beispiel wird das Fluid zumindest über den zeitlichen Verlauf des kompletten Fügevorgangs durch den Einlass 23 in den Strömungskanal 32 eingelassen, wobei das Fluid aus der Aussparung 33 ausströmt, solange der Niederhalter 6 nicht am Werkstück 25 aufliegt. Beispielsweise wird für einen Fügevorgang zuerst die Fügewerkzeugeinheit 2 in Richtung des zu bearbeitenden Werkstücks 25 bewegt bis der Niederhalter 6 und das Werkstückgegenelement 4 am Werkstück anliegen. Sobald der Niederhalter 6 am Werkstück 25 aufliegt bewegt der Antrieb 8 das bewegbare Werkzeug 7 entlang der Bewegungsachse 35 in Richtung des Werkstücks 25 in eine Startposition gemäß Figur 5. Diese Situation stellt eine Ausgangsposition des bewegbaren Werkzeugs 7 dar. Hierdurch ist ein Abstand zwischen dem bewegbaren Werkzeug 7 und dem Werkstück 25 minimiert, sodass das bewegbare Werkzeug 7 über eine vergleichsweise kurze Wegstrecke vom Werkstück 25 beabstandet ist.

Beispielsweise wird durch die Bewegung des bewegbaren Werkzeugs 7 durch den Antrieb 8 ein Federelement geladen, wodurch der Niederhalter 6 mit einer vom Federelement bereitgestellten Kraft gegen das Werkstück 25 gedrückt wird. Dadurch wird der Niederhalter 6 insbesondere fest an das Werkstück 25 gedrückt, wodurch ein Austreten von Licht zwischen Niederhalter 6 und Werkstück 25 verhindert werden soll bzw. eine Lichtdichtigkeit nach außen von Null bis z. B. 10 % erreicht werden soll. Weiter kann durch die vergleichsweise hohe Anpresskraft des Niederhalters 6 auf die am Niederhalter 6 anliegende Oberfläche des Werkstücks 25 Wärme von einem ersten Werkstückteil des Werkstücks 25 wie einer ersten Werkstücklage, welche in Kontakt mit dem Niederhalter ist, auf ein zweites Werkstücksteil des Werkstück 25 bzw. eine zweite Werkstücklage, welche am Werkzeuggegenelement 4 anliegt, verbessert übertragen werden.

Beispielsweise erfolgt anschließend eine Überprüfung, ob der Niederhalter 6 wie gewünscht am Werkstück 25 anliegt. Beispielsweise wird dafür durch die Kontrolleinheit 40 zunächst die Position des bewegbaren Werkzeugs 7 bestimmt. Beispielsweise wird außerdem die Position des Sicherheitsschalters 28 ermittelt, und damit die Position des Niederhalters und des Lichtleitungssystems 9 überprüft. Zum Beispiel wird, nachdem beide Prüfungen den Sollzustand bestätigen bzw. die gewünschten Ergebnisse liefern und als richtig identifiziert wurden, der Druck innerhalb des Strömungskanals 38 bestimmt.

Beispielsweise wird zur Druckbestimmung der zweite Auslass 37 bzw. ein Ventil zur Pumpe an der Absaugleitung 20 geschlossen (s. Fig. 4). Dadurch staut sich das Fluid innerhalb des Strömungskanals 38, wenn die Aussparung 33 am Niederhalter 6 durch das Werkstück 25 abgedeckt ist und wenn der Strömungskanal 38 bzw. das Lichtleitungssystem 9 keine Beschädigungen aufweist. Zum Beispiel wird der Druck im Strömungskanal 38 durch einen Sensor (nicht dargestellt), z. B. ein Drucksensor, gemessen. Der durch den Sensor gemessene Fluid- bzw. Gasdruck wird zur Kontrolleinheit 40 kommuniziert, wobei die Kontrolleinheit 40 den vom Sensor gemessenen Druck mit einem vorgegebenem Schwellenwert bzw. Sollbereich vergleicht. Der Schwellenwert ist vorzugsweise derart gewählt, dass selbst bei einem schmalen Spalt zwischen dem Niederhalter 6 und dem Werkstück 25 der durch den Sensor gemessene Druck im Strömungskanal 38 den Schwellenwert nicht überschreiten kann. Damit ist gewährleistet, dass nur bei einem gewünschten, z. B. senkrechten, Aufliegen des Niederhalters 6 am Werkstück 25 die Lichtquelle 10 aktivierbar ist, so dass keine Lichtstrahlung bzw. keine personengefährdende Lichtstrahlung wie Laserstrahlung nach außen austritt.

Beispielsweise wird nach Überprüfung des Drucks im Strömungskanal 3 der zweite Auslass und/oder ein Ventil zur Pumpe der Absaugleitung geöffnet, so dass eine Strömung im Strömungskanal 38 wieder aufgebaut wird (s. Fig. 5, Pfeile). Das Fluid strömt somit vom Einlass 23 zum zweiten Spiegel 13, zum Schutzglas 15 entlang der ersten Ausnehmung 32 zur zweiten Ausnehmung 34 entlang der Aussparung 36 zum zweiten Auslass 37 und wird am zweiten Auslass 37 abgesaugt. Somit werden Anhaftungen und Verschmutzungen, z. B. an den Spiegeln 12, 13, aus dem Strömungskanal 38 durch die Strömung im Strömungskanal 38 entfernt.

Zum Beispiel aktiviert die Kontrolleinheit 40 die Lichtquelle 10 sobald die Strömung im Strömungskanal 38 ausgebildet ist. Beispielsweise wird das Werkstück 25 durch die Lichtstrahlen der Lichtquellte 10 erwärmt, wobei ein Teil der Lichtstrahlen, insbesondere wenn die Oberfläche noch nicht erwärmt ist, am Werkstück 25 reflektiert werden. Die Richtung der Lichtstrahlung ist durch Pfeile L angedeutet (s. Fig. 5). Die reflektierte Lichtstrahlung gelangt entlang der zweiten Ausnehmung 34 zur Strahlenfalle 14 bzw. zum Strahlensumpf. Dadurch ist ein Strahlenschutz ohne zusätzliche Strahlenschutzkabine, welche die Werkzeugzange 1 umhaust, gewährleistet.

Beispielsweise wird die Temperatur am Werkstück durch das Pyrometer 24 gemessen (s. Fig. 6). Das Pyrometer 24 ist am Niederhalter 6 angeordnet, wobei eine dazugehörige zur Temperatur-Messung nötige Bohrung 39 am Niederhalter 6 ausgebildet ist. Zum Beispiel ist die Bohrung 39 relativ zur ersten Ausnehmung 32 um 90° um die Bewegungsachse 35 umfänglich gedreht am Niederhalter 6 vorhanden, z. B. umfänglich um 90 Winkelgrade gedreht. Hierdurch kann eine Wärmestrahlung, die vom erwärmten Werkstück 25 abgestrahlt wird, über die Bohrung 39 das Pyrometer 24 erreichen. Damit wird eine aktuelle bzw. momentane Temperatur des Werkstücks 25, insbesondere eine Temperatur der Oberfläche des Werkstücks 25 an der Fügestelle des Werkstücks ermittelt. Beispielsweise übermittelt das Pyrometer 24 die gemessene Temperatur an die Kontrolleinheit 40, wobei in der Kontrolleinheit 40 eine Solltemperatur bzw. eine zu erreichende Temperatur gespeichert ist und mit dem aktuellen Werkstück-Oberflächentemperatur-Messwert verglichen wird. In der Kontrolleinheit sind beispielsweise mehrere unterschiedliche zu erreichende Temperaturen für jeweils unterschiedliche Materialien abgelegt bzw. gespeichert. Beispielsweise wird, wenn die betreffende zu erreichende Temperatur vor Ablauf einer bestimmten Zeitdauer erreicht wird, die Lichtquelle 10 deaktiviert oder der Fügeprozess vorzeitig gestartet. Kann die zu erreichende Temperatur nicht in der bestimmten Zeitdauer erreicht werden, wird der Fügevorgang z. B. abgebrochen oder ein anderer Verfahrensschritt eingeleitet.

Beispielsweise wird insbesondere unmittelbar vor dem Ausschalten der Lichtquelle 10 oder zeitgleich mit dem Ausschalten der Lichtquelle 10 oder nach dem Ausschalten der Lichtquelle 10 eine Bewegung des bewegbaren Werkzeugs 7 in Richtung Werkzeuggegenelement 4 gestartet, sodass das Werkstück 25 an der Fügestelle gefügt wird (Figur 7). Beispielsweise ist die Kontrolleinheit 40 dazu ausgebildet, zu prüfen, ob die Lichtquelle 10 und damit eine Beleuchtung des Werkstücks 25 ausgeschaltet ist, wenn das bewegbare Werkzeug 7 einen Bereich des Strahlungswegs der Lichtstrahlen der Lichtquelle 10 auf seinem Weg in Richtung Werkzeuggegenelement 4 erreicht. Hierdurch soll verhindert werden, dass ein vorderes Ende des bewegbaren Werkzeugs 7 durch Bestrahlung mit Lichtstrahlen der Lichtquelle 10 sich ungewollt erhitzt. Ebenfalls soll hierdurch eine Sicherheit einer Person Mitarbeiters an bzw. im Nahbereich der Fügewerkzeugeinheit 2 gewährleistet werden. Vorstellbar ist jedoch auch, dass die Kontrolleinheit zunächst prüft, ob die Lichtquelle 10 und damit eine Beleuchtung des Werkstücks 25 ausgeschaltet ist und erst nach der Überprüfung der ausgeschalteten Lichtquelle 10 eine Bewegung des bewegbare Werkzeugs 7 zum Werkstück 25 hin aktiviert.

Beispielsweise ist während der Herstellung der Fügeverbindung insbesondere dauerhaft eine Strömung des Fluids im Strömungskanal 38 aufrechtgehalten, so dass Verschmutzungen, welche z. B. beim Herstellen der Fügeverbindung entstehen, vom Fluidstrom mitgenommen und abtransportiert werden (s. Fig. 5).

Beispielsweise wird das bewegbare Werkzeug 7 nach Beendigung des Fügevorgangs in eine Ausgangsposition gemäß Fig. 4 zurück bewegt. Zum Beispiel wird anschließend der zweite Auslass 37 geschlossen. Beispielsweise wird anschließend die Fügewerkzeugeinheit 2, insbesondere der Niederhalter 6 durch den Antrieb 8 vom Werkstück 25 wegbewegt. Beispielsweise strömt dauerhaft Fluid durch den Einlass 23 in Richtung Aussparung 33, damit Optiken z. B. optische Elemente wie die Spiegel 12, 13 nicht verunreinigt werden, auch während der Stillstandzeit.

### Bezugszeichenliste

| | | | |
|---|---|---|---|
| 1 | Werkzeugzange | 36 | Aussparung |
| 2 | Fügewerkzeugeinheit | 37 | Auslass |
| 3 | Werkzeugbügel | 38 | Strömungskanal |
| 4 | Werkzeuggegenelement | 39 | Bohrung |
| 5 | Verbindungselement | 40 | Kontrolleinheit |
| 6 | Niederhalter | 41 | Bereich |
| 7 | Werkzeug | 42 | Werkstückoberfläche |
| 8 | Antriebseinheit | | |
| 9 | Lichtleitungssystem | | |
| 10 | Lichtquelle | | |
| 11 | Kollimator | | |
| 12 | Spiegel | | |
| 13 | Spiegel | | |
| 14 | Strahlenfalle | | |
| 15 | Schutzglas | | |
| 16 | Steckplatz | | |
| 17 | Steckplatz | | |
| 18 | Steckplatz | | |
| 19 | Steckplatz | | |
| 20 | Absaugleitung | | |
| 21 | Steckplatz | | |
| 22 | Steckplatz | | |
| 23 | Einlass | | |
| 24 | Pyrometer | | |
| 25 | Werkstück | | |
| 26 | Verstellelement | | |
| 27 | Befestigungselement | | |
| 28 | Sicherungsschalter | | |
| 29 | Anbindungselement | | |
| 30 | Befestigungsmittel | | |
| 31 | Kühlplatte | | |
| 32 | Ausnehmung | | |
| 33 | Aussparung | | |
| 34 | Ausnehmung | | |
| 35 | Bewegungsachse | | |

## Patentansprüche

1. Fügewerkzeugeinheit (2), wobei die Fügewerkzeugeinheit (2) einen Niederhalter (6) mit einem linear bewegbaren Werkzeug (7) und ein Werkzeuggegenelement (4) aufweist,
wobei der Niederhalter (6) mit dem linear bewegbaren Werkzeug (7) und das Werkzeuggegenelement (4) sich gegenüberliegend vorhanden sind, wobei ein Werkstück (25) im angeordneten Zustand an der Fügewerkzeugeinheit (2) am Werkzeuggegenelement (4) aufliegt, wobei der Niederhalter (6) im angeordneten Zustand des Werkstücks (25) an der Fügewerkzeugeinheit (2) an einer Oberfläche des Werkstücks (25) anstehend anordenbar ist, wobei der Niederhalter (6) ein Lichtleitungssystem (9) aufweist,
wobei das Lichtleitungssystem (9) dazu ausgebildet ist, einen Lichtstrahl eines Lichts in Richtung einer Fügestelle des Werkstücks (25) zu leiten, wenn das Werkstück (25) an der Fügewerkzeugeinheit (2) angeordnet ist, wobei das Lichtleitungssystem (9) derart am Niederhalter (6) vorhanden ist, dass der Lichtstrahl ausschließlich in einem Winkel größer 0° zu einer Bewegungsachse (35) des linear bewegbaren Werkzeugs (7) auf die Fügestelle einstrahlt, wobei das Lichtleitungssystem (9) des Niederhalters (6) das Licht entlang seines Lichtstrahls nach außen lichtdicht abschirmt, **dadurch gekennzeichnet, dass** das Lichtleitungssystem (9) im Niederhalter (6) integriert vorhanden ist, sodass der Lichtstrahl unmittelbar an das Werkstück (25) heranführbar ist, wobei die lichtdichte Umschirmung am Niederhalter (6) durch das Lichtleitungssystem aufgrund der aus dem Vollmaterial des Niederhalters (6) herausgearbeiteten Leitung des Lichtleitungssystems (9) innerhalb des Niederhalters (6) eingerichtet ist.

2. Fügewerkzeugeinheit (2) nach einem der vorangegangenen Ansprüche, **dadurch gekennzeichnet, dass** der Niederhalter (6) derart ausgebildet ist, dass im angeordneten Zustand eines Werkstücks (25) an der Fügewerkzeugeinheit (2) der Niederhalter (6) derart an der Oberfläche des Werkstücks (25) anstehend anordenbar ist, dass der Niederhalter (6) die Fügestelle umschließt, sodass maximal 20% der Strahlungsleistung des Lichts zwischen Niederhalter (6) und Oberfläche nach außen abstrahlt.

3. Fügewerkzeugeinheit (2) nach einem der vorangegangenen Ansprüche, **dadurch gekennzeichnet, dass** das Lichtleitungssystem (9) derart am Niederhalter (6) vorhanden ist, dass der Lichtstrahl ausschließlich in einem Winkelbereich zwischen 5° bis 40° relativ zur Bewegungsachse (35) des linear bewegbaren Werkzeugs (7) auf die Fügestelle des Werkstücks (25) einstrahlt.

4. Fügewerkzeugeinheit (2) nach einem der vorangegangenen Ansprüche, **dadurch gekennzeichnet, dass** das linear bewegbare Werkzeug (7) als ein Fügestempel ausgebildet ist.

5. Fügewerkzeugeinheit (2) nach einem der vorangegangenen Ansprüche, **dadurch gekennzeichnet, dass** das Werkzeuggegenelement (4) ein zweites bewegbares Werkzeug aufweist.

6. Fügewerkzeugeinheit (2) nach einem der vorangegangenen Ansprüche, **dadurch gekennzeichnet, dass** am Werkzeuggegenelement (4) ein weiteres, z. B. zweites, Lichtleitungssystem (9) vorhanden ist, um Licht in Richtung einer weiteren bzw. rückseitigen Oberfläche des Werkstücks (25) zu leiten, wobei das Werkstück (25) zumindest mit einem Abschnitt der rückseitigen weiteren Oberfläche am Werkzeuggegenelement (4) aufliegt.

7. Fügewerkzeugeinheit (2) nach einem der vorangegangenen Ansprüche, **dadurch gekennzeichnet, dass** der Niederhalter (6) als ein Niederhalter (6) einer Fügestempeleinheit oder als ein Niederhalter (6) einer Matrizeneinheit ausgebildet ist.

8. Fügewerkzeugeinheit (2) nach einem der vorangegangenen Ansprüche, **dadurch gekennzeichnet, dass** das Werkzeuggegenelement als eine Matrizeneinheit ausgebildet ist und der Niederhalter (6) mit dem bewegbaren Werkzeug (7) Bestandteil einer Fügestempeleinheit ist.

9. Werkzeugzange (1) mit einer Fügewerkzeugeinheit (2) nach einem der vorangegangenen Ansprüche und einem Werkzeugbügel (3).

10. Fügevorgang eines Werkstücks (25) durch eine Fügewerkzeugeinheit (2) nach einem der vorangegangenen Ansprüche 1 bis 8, mit den nacheinander folgenden Verfahrensschritten:
- Anordnen eines zu bearbeitenden Werkstücks (25) an die Fügewerkzeugeinheit (2).
- Bewegen eines Niederhalters (6) der Fügewerkzeugeinheit (2) relativ zu einem Werkzeuggegenelement (4) der Fügewerkzeugeinheit (2) bis zu einer Position, an welcher der Niederhalter (6) und das Werkzeuggegenelement (4) das Werkstück (25) berühren
- Halten des Niederhalters (6) an der Position
- Starten einer Bestrahlung oder einer Beleuchtung einer Fügestelle des Werkstücks (25) mit einem Licht einer Lichtquelle (10) der Fügewerkzeugeinheit (2), wenn der Niederhalter (6) die Position erreicht hat.

11. Fügevorgang nach dem vorangegangenen Anspruch 10 mit folgenden weiteren Verfahrensschritten:
- Starten einer Bewegung eines bewegbaren Werkzeugs (7) der Fügewerkzeugeinheit (2) in Richtung der Fügestelle des Werkstücks (25), um das Werkstück (25) zu fügen.

12. Fügevorgang nach einem der vorangegangenen Ansprüche 10 oder 11 mit folgenden weiteren Verfahrensschritten:
- Beenden der Beleuchtung oder der Bestrahlung der Fügestelle des Werkstücks (25)
- Wegbewegen des Niederhalters (6) von der Position.

13. Fügevorgang nach einem der vorangegangenen Ansprüche 10 bis 12 mit folgenden weiteren Verfahrensschritten:
- Beenden der Beleuchtung oder der Bestrahlung der Fügestelle des Werkstücks (25) zeitgleich mit dem Start der Bewegung des bewegbaren Werkzeugs (7) der Fügewerkzeugeinheit (2) in Richtung der Fügestelle des Werkstücks (25) oder zeitlich nach dem Start der Bewegung des bewegbaren Werkzeugs (7) der Fügewerkzeugeinheit (2) in Richtung der Fügestelle des Werkstücks (25).

## Claims

1. Joining tool unit (2), wherein the joining tool unit (2) comprises a holding-down device (6) with a linearly movable tool (7), and a tool counter-element (4),
wherein the holding-down device (6) with the linearly movable tool (7) and the tool counter-element (4) are located opposite each other, wherein a workpiece (25) in the arranged state at the joining tool unit (2) rests on the tool counter-element (4), wherein the holding-down device (6) in the arranged state of the workpiece (25) at the joining tool unit (2) is arrangeable so as to abut a surface of the workpiece (25), wherein the holding-down device (6) has a light guidance system (9),
wherein the light guidance system (9) is designed to guide a light beam of light in the direction of a joining site of the workpiece (25) when the workpiece (25) is arranged at the joining tool unit (2), wherein the light guidance system (9) is present at the holding-down device (6) in such a way that the light beam irradiates the joining site exclusively at an angle of greater than 0° to a movement axis (35) of the linearly movable tool (7), wherein the light guidance system (9) of the holding-down device (6) shields the light along its light beam against the outside in a light-tight manner, **characterized in that** the light guidance system (9) is integrated in the holding-down device (6) such that the light beam can be brought directly to the workpiece (25), wherein the light-tight shielding at the holding-down device (6) by way of the light guidance system is set up due to the line of the light guidance system (9) within the holding-down device (6) carved out from the solid material of the holding-down device (6).

2. Joining tool unit (2) according to any of the preceding claims, **characterized in that** the holding-down device (6) is designed in such a way that in the arranged state of a workpiece (25) at the joining tool unit (2), the holding-down device (6) is arrangeable so as to abut the surface of the workpiece (25) such that the holding-down device (6) encloses the joining site so that a maximum of 20% of the radiant power of the light is emitted to the outside between the holding-down device (6) and the surface.

3. Joining tool unit (2) according to either of the preceding claims, **characterized in that** the light guidance system (9) is present at the holding-down device (6) in such a way that the light beam irradiates the joining site of the workpiece (25) exclusively in an angle region of between 5° and 40° relative to the movement axis (35) of the linearly movable tool (7).

4. Joining tool unit (2) according to any of the preceding claims, **characterized in that** the linearly movable tool (7) is designed as a joining punch.

5. Joining tool unit (2) according to any of the preceding claims, **characterized in that** the tool counter-element (4) has a second movable tool.

6. Joining tool unit (2) according to any of the preceding claims, **characterized in that** a further, e.g. second, light guidance system (9) is present at the tool counter-element (4) in order to guide light in the direction of a further or rear surface of the workpiece (25), wherein the workpiece (25) rests at least with a section of the rear further surface on the tool counter-element (4).

7. Joining tool unit (2) according to any of the preceding claims, **characterized in that** the holding-down device (6) is designed as a holding-down device (6) of a joining punch unit or as a holding-down device (6) of a die unit.

8. Joining tool unit (2) according to any of the preceding claims, **characterized in that** the tool counter-element is designed as a die unit and the holding-down device (6) with the movable tool (7) is a constituent part of a joining punch unit.

9. Tool gripper (1) with a joining tool unit (2) according to any of the preceding claims and a tool bracket (3).

10. Joining operation of a workpiece (25) by means of a joining tool unit (2) according to any of the preceding Claims 1 to 8, comprising the successive method steps:
- arranging a workpiece (25) to be processed at the joining tool unit (2),
- moving a holding-down device (6) of the joining tool unit (2) relative to a tool counter-element (4) of the joining tool unit (2) to a position where the holding-down device (6) and the tool counter-element (4) touch the workpiece (25),
- holding the holding-down device (6) at the position,
- starting irradiation or illumination of a joining site of the workpiece (25) with light from a light source (10) of the joining tool unit (2) when the holding-down device (6) has reached the position.

11. Joining operation according to the preceding Claim 10, comprising the following further method steps:
- starting a movement of a movable tool (7) of the joining tool unit (2) in the direction of the joining site of the workpiece (25) in order to join the workpiece (25).

12. Joining operation according to either of the preceding Claims 10 and 11, comprising the following further method steps:
- terminating the illumination or irradiation of the joining site of the workpiece (25),
- moving the holding-down device (6) away from the position.

13. Joining operation according to any of the preceding Claims 10 to 12, comprising the following further method steps:
- terminating the illumination or irradiation of the joining site of the workpiece (25) at the same time as the start of the movement of the movable tool (7) of the joining tool unit (2) in the direction of the joining site of the workpiece (25) or after the start of the movement of the movable tool (7) of the joining tool unit (2) in the direction of the joining site of the workpiece (25).

## Revendications

1. Unité (2) formant outil d'assemblage, l'unité (2) formant outil d'assemblage comprenant un dispositif de maintien (6) avec un outil (7) mobile linéairement et un contre-élément d'outil (4),
le dispositif de maintien (6), avec l'outil (7) mobile linéairement et le contre-élément d'outil (4), étant agencés en vis-à-vis, une pièce à traiter (25) reposant, dans un état de positionnement, sur l'unité (2) formant outil d'assemblage, contre le contre-élément d'outil (4), le dispositif de maintien (6) étant apte à être disposé, lorsque la pièce à traiter (25) est dans l'état de positionnement, sur l'unité (2) formant outil d'assemblage, contre une surface de la pièce à traiter (25), le dispositif de maintien (6) présentant un système (9) de guidage de lumière,
le système (9) de guidage de lumière étant conçu pour guider un faisceau de lumière vers un point d'assemblage de la pièce à traiter (25) lorsque la pièce à traiter (25) est disposée sur l'unité (2) formant outil d'assemblage, le système (9) de guidage de lumière étant prévu sur le dispositif de maintien (6) de telle sorte que le faisceau lumineux ne soit émis que sur le point d'assemblage selon un angle supérieur à 0° par rapport à un axe de déplacement (35) de l'outil (7) mobile linéairement, le système (9) de guidage de lumière du dispositif de maintien (6) isolant la lumière vis-à-vis de l'extérieur, le long du faisceau lumineux de celle-ci, de manière opaque, **caractérisé en ce que** le système (9) de guidage de lumière est intégré dans le dispositif de maintien (6) de sorte que le faisceau lumineux soit apte à être amené directement à la pièce à traiter (25), l'isolation opaque sur le dispositif de maintien (6) étant réalisée à l'intérieur du dispositif de maintien (6), par le système de guidage de lumière, grâce au fait que le guidage du système (9) de guidage de lumière est usiné dans le matériau plein du dispositif de maintien (6).

2. Unité (2) formant outil d'assemblage selon l'une des revendications précédentes, **caractérisée en ce que** le dispositif de maintien (6) est conçu de telle sorte qu'à l'état de positionnement d'une pièce à traiter (25) sur l'unité (2) formant outil d'assemblage, le dispositif de maintien (6) soit apte à être positionné contre la surface de la pièce à traiter (25) de telle sorte que le dispositif de maintien (6) entoure le point d'assemblage, de sorte que 20 % au maximum de la puissance rayonnante de la lumière entre le dispositif de maintien (6) et la surface soit rayonnée vers l'extérieur.

3. Unité (2) formant outil d'assemblage selon l'une des revendications précédentes, **caractérisée en ce que** le système (9) de guidage de lumière est prévu sur le dispositif de maintien (6) de telle sorte que le faisceau lumineux rayonne exclusivement dans une gamme angulaire comprise entre 5° et 40° par rapport à l'axe de déplacement (35) de l'outil (7) mobile linéairement sur le point d'assemblage de la pièce à traiter (25).

4. Unité (2) formant outil d'assemblage selon l'une des revendications précédentes, **caractérisée en ce que** l'outil (7) mobile linéairement est conçu sous la forme d'un poinçon d'assemblage.

5. Unité (2) formant outil d'assemblage selon l'une des revendications précédentes, **caractérisée en ce que** le contre-élément d'outil (4) comprend un deuxième outil mobile.

6. Unité (2) formant outil d'assemblage selon l'une des revendications précédentes, **caractérisée en ce qu'**un autre système, par exemple un deuxième système (9) de guidage de lumière, est prévu sur le contre-élément d'outil (4), pour guider la lumière vers une autre surface ou vers la surface arrière de la pièce à traiter (25), la pièce à traiter (25) reposant au moins avec une partie de l'autre surface arrière sur le contre-élément d'outil (4).

7. Unité (2) formant outil d'assemblage selon l'une des revendications précédentes, **caractérisée en ce que** le dispositif de maintien (6) est conçu sous la forme d'un dispositif de maintien (6) d'une unité de poinçon d'assemblage ou sous la forme d'un dispositif de maintien (6) d'une unité formant matrice.

8. Unité (2) formant outil d'assemblage selon l'une des revendications précédentes, **caractérisée en ce que** le contre-élément **d'outil** est conçu sous la forme **d'une** unité formant matrice et **en ce que** le dispositif de maintien (6) avec l'outil mobile (7) fait partie intégrante d'une unité de poinçonnage d'assemblage.

9. Dispositif (1) de préhension d'outils comprenant une unité (2) formant outil d'assemblage selon l'une des revendications précédentes et un étrier d'outil (3).

10. Procédé d'assemblage d'une pièce à traiter (25) par une unité (2) formant outil d'assemblage selon l'une des revendications précédentes 1 à 8, comprenant les étapes successives suivantes :
- disposition d'une pièce à traiter (25) sur l'unité (2) formant outil d'assemblage,
- déplacement d'un dispositif de maintien (6) de l'unité (2) formant outil d'assemblage par rapport à un contre-élément d'outil (4) de l'unité (2) formant outil d'assemblage jusqu'à une position dans laquelle le dispositif de maintien (6) et le contre-élément d'outil (4) sont en contact avec la pièce à traiter (25),
- maintien du dispositif de maintien (6) dans la position,
- démarrage d'un rayonnement ou d'un éclairage d'un point d'assemblage de la pièce à traiter (25) avec une lumière provenant d'une source de lumière (10) de l'unité (2) formant outil d'assemblage lorsque le dispositif de maintien (6) a atteint la position.

11. Procédé d'assemblage selon la revendication 10 précédente, comprenant les étapes supplémentaires suivantes :
- démarrer un mouvement d'un outil mobile (7) de l'unité (2) formant outil d'assemblage en direction du point d'assemblage de la pièce à traiter (25) afin d'assembler la pièce à traiter (25).

12. Procédé d'assemblage selon l'une des revendications 10 ou 11 précédentes, comprenant les étapes supplémentaires suivantes :
- arrêt de l'éclairage ou de l'irradiation du point d'assemblage de la pièce à traiter (25),
- éloignement du dispositif de maintien (6) de la position.

13. Procédé d'assemblage selon l'une des revendications précédentes 10 à 12, comprenant les étapes supplémentaires suivantes :
- arrêt de l'éclairage ou de l'irradiation du point d'assemblage de la pièce à traiter (25) simultanément au démarrage du mouvement de l'outil mobile (7) de l'unité **d'assemblage** (2) en direction du point **d'assemblage** de la pièce à traiter (25) ou après le démarrage du mouvement de l'outil mobile (7) de l'unité d'assemblage (2) en direction du point **d'assemblage** de la pièce à traiter (25).
